# EUROPEAN PATENT APPLICATION

(11) **EP 4 773 680 A1**
(43) Date of publication of application: **08.07.2026**
(21) Application number: 23958534.2
(22) Date of filing: 15.11.2023
(51) Int. Cl.: H04W 52/02, H04W 24/08

(54) **MEASUREMENT CONFIGURATION TRANSMISSION METHOD AND APPARATUS, DEVICE, MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); HU, Rongyi, Dongguan, Guangdong 523860 (CN)
(74) Representative: Taor, Simon Edward William
(86) International application number: PCT/CN2023/131691
(87) International publication number: WO 2025/102252

(57) **Abstract**

A method and apparatus for measurement configuration transmission, a device, a medium and a program product are provided in the disclosure, which belong to the field of communication technology. The method is performed by a terminal device. The terminal device has a first receiver and a second receiver. Operation power consumption of the first receiver is lower than operating power consumption of the second receiver. The method includes the following. A measurement configuration is received. The measurement configuration includes a configuration for the first receiver to perform radio resource management (RRM) measurement. The terminal device obtains the measurement configuration, so that terminal device can perform RRM measurement using the first receiver, thereby reducing power consumption compared with performing RRM measurement using the second receiver.

## Description

### TECHNICAL FIELD

This disclosure relates to the field of communication technology, and in particular, to a method and apparatus for measurement configuration transmission, a device, a medium and a program product.

### BACKGROUND

For a terminal device having a wake-up receiver and a main radio, in order to detect a physical downlink control channel (PDCCH), the main radio needs to be activated. By introducing a wake-up signal, power consumption of the main radio can be saved.

### SUMMARY

A method and apparatus for measurement configuration transmission, a device, a medium, and a program product are provided in the disclosure. The technical solution at least includes the following.

According to an aspect of an embodiment of the disclosure, a method for measurement configuration transmission is provided. The method is performed by a terminal device. The terminal device includes a first receiver and a second receiver. Operating power consumption of the first receiver is lower than operating power consumption of the second receiver. The method includes the following. A measurement configuration is received. The measurement configuration includes a configuration for the first receiver to perform radio resource management (RRM) measurement.

According to another aspect of an embodiment of the disclosure, a method for measurement configuration transmission is provided. The method is performed by a network device. The method includes the following. A measurement configuration is sent. The measurement configuration includes a configuration for a first receiver to perform RRM measurement. A terminal device includes the first receiver and a second receiver. Operating power consumption of the first receiver is lower than operating power consumption of the second receiver.

According to another aspect of an embodiment of the disclosure, an apparatus for measurement configuration transmission is provided. The apparatus including a first receiver and a second receiver. Operating power consumption of the first receiver is lower than operating power consumption of the second receiver. The apparatus includes a receiving module configured to receive a measurement configuration. The measurement configuration includes a configuration for the first receiver to perform RRM measurement.

According to another aspect of an embodiment of the disclosure, an apparatus for measurement configuration transmission is provided. The apparatus includes a sending module configured to send a measurement configuration. The measurement configuration includes a configuration for a first receiver to perform RRM measurement. An apparatus for measurement configuration reception includes the first receiver and a second receiver. Operating power consumption of the first receiver is lower than operating power consumption of the second receiver.

According to another aspect of an embodiment of the disclosure, a terminal device is provided. The terminal device includes a processor, a transceiver connected to the processor, and a memory configured to store executable instructions of the processor. The processor is configured to load and execute the executable instructions to implement the method for measurement configuration transmission according to any one of the above aspects.

According to another aspect of an embodiment of the disclosure, a network device is provided. The network device includes a processor, a transceiver connected to the processor, and a memory configured to store executable instructions of the processor. The processor is configured to load and execute the executable instructions to implement the method for measurement configuration transmission according to any one of the above aspects.

According to another aspect of an embodiment of the disclosure, a chip is provided. The chip includes a programmable logic circuit and/or program instructions. When the chip is on operation, the chip is used to implement the method for measurement configuration transmission according to any one of the above aspects.

According to another aspect of an embodiment of the disclosure, a computer-readable storage medium is provided. At least one section of a program is stored in the computer-readable storage medium. At least one section of the program is loaded and executed by a processor to implement the method for measurement configuration transmission according to any one of the above aspects.

According to another aspect of an embodiment of the disclosure, a computer program product or a computer program is provided. The computer program product or the computer program includes computer instructions. The computer instructions are stored in a computer-readable storage medium. The computer instructions are obtained by a processor from the computer-readable storage medium. The computer instructions are executed by the processor to implement the method for measurement configuration transmission according to any one of the above aspects.

The technical solution provided by the embodiments of the disclosure may include the following beneficial effects.

The measurement configuration is received, where the measurement configuration includes the configuration for the first receiver to perform RRM measurement, the terminal device includes the first receiver and the second receiver, and operating power consumption of the first receiver is lower than operating power consumption of the second receiver. The terminal device obtains the measurement configuration, so that the terminal device can perform RRM measurement using the first receiver, thereby reducing power consumption compared with performing RRM measurement using the second receiver.

### BRIEF DESCRIPTION OF THE DRAWINGS

In order to describe more clearly technical solutions of embodiments of the disclosure, the following gives a brief introduction to the accompanying drawings required for describing the embodiments. Apparently, the accompanying drawings described below are merely some embodiments of the disclosure. Based on these accompanying drawings, those of ordinary skill in the art can also obtain other accompanying drawings without creative effort.
FIG. 1 is a schematic diagram of a receiver system provided by the related art.
FIG. 2 is a schematic diagram illustrating on-off keying modulation provided by the related art.
FIG. 3 is a schematic diagram of a multi-carrier on-off keying (MC-OOK) signal provided by the related art.
FIG. 4 is a schematic diagram of a synchronization signal and physical broadcast channel (PBCH) block (SSB) measurement timing configuration provided by the related art.
FIG. 5 is a schematic diagram illustrating a low mobility criterion provided by the related art.
FIG. 6 is a flow chart of a method for measurement configuration transmission provided by an exemplary embodiment of the disclosure.
FIG. 7 is a flow chart of a method for measurement configuration transmission provided by an exemplary embodiment of the disclosure.
FIG. 8 is a schematic diagram illustrating generation of an MC-OOK symbol provided by an embodiment of the disclosure.
FIG. 9 is a schematic diagram illustrating generation of an MC-OOK symbol provided by an embodiment of the disclosure.
FIG. 10 is a block diagram of an apparatus for configuration information transmission provided by an exemplary embodiment of the disclosure.
FIG. 11 is a block diagram of an apparatus for configuration information transmission provided by an exemplary embodiment of the disclosure.
FIG. 12 is a schematic structural diagram of a terminal device or a network device provided by an exemplary embodiment of the disclosure.

### DETAILED DESCRIPTION

To make the objectives, technical solutions, and advantages of the disclosure more clearly, embodiments of the disclosure is described in further detail below with reference to the accompanying drawings. Exemplary embodiments are described in detail herein, and examples of these embodiments are illustrated in the accompanying drawings. When the following elaboration relate to the accompanying drawings, unless otherwise stated, the same numerals in different accompanying drawings refer to the same or similar elements. The implementations described in the following exemplary embodiments are not intended to represent all implementations consistent with the implementations of the disclosure. Instead, they are merely examples of apparatuses and methods consistent with some aspects of the disclosure as elaborated in the appended claims.

The terms used in the present disclosure are merely intended for describing particular embodiments, rather than limiting the present disclosure. The singular form "a/an", "said", and "the" used in the disclosure and the appended claims are also intended to include multiple forms, unless specified otherwise in the context. It can also be understood that the term "and/or" as used herein refers to and includes any and all possible combinations of one or more of the associated listed items.

It can be understood that, although the terms "first", "second", "third", etc. may be used in the present disclosure to describe various information, such information shall not be limited to these terms. These terms are merely used for distinguishing one type of information from another. For example, without departing from the scope of the present disclosure, "first information" may also be referred to as "second information", and similarly, "second information" may also be referred to as "first information". Depending on the context, the word "if" as used herein may be interpreted as "when", "upon" or "determining in response to".

The technical solutions described in some embodiments of the disclosure may be applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, a cellular Internet of Things (IoT) system, or a cellular passive IoT system. It may also be applicable to a subsequent evolved system of the 5G NR system, and may also be applicable to a subsequent evolution system of 6th-generation (6G).

It can be understood that, in some embodiments of the disclosure, "5G" may also be referred to as "5G NR" or "NR".

It can be understood that, in the illustration of embodiments of the disclosure, the term "correspondence" may indicate a direct or indirect correspondence between the two, or may indicate an association between the two, or may indicate a relationship of indicating and being indicated or configuring and being configured, etc.

In embodiments of the disclosure, the "pre-defined" can be implemented by pre-saving a corresponding code or table in a device (e.g., including a terminal device and a network device), or in other manners that can be used for indicating related information, and the disclosure is not limited in this regard. For example, the "pre-defined" may refer to being defined in a protocol.

In embodiments of the disclosure, the "protocol" may refer to a communication standard protocol, which may include, for example, an LTE protocol, an NR protocol, and a related protocol applied to a future communication system, and the disclosure is not limited in this regard.

The receiver system is introduced in the following.

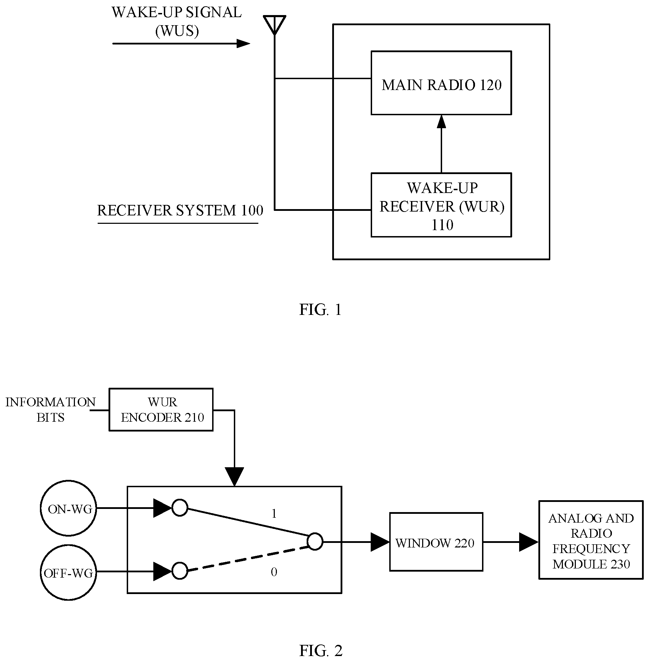

FIG. 1 is a schematic diagram of a receiver system 100 provided by the related art. The receiver system 100 includes a wake-up receiver (WUR) 110 and a main radio 120.

In some embodiments, the main radio 120 may be equivalently understood as a main transceiver or a main air-interface communication unit.

To further save power, a WUR is introduced for receiving a wake-up signal (WUS). The WUR has the characteristics of extremely low cost, extremely low complexity, and ultra-low power consumption, and mainly receives a WUS through envelope detection. Therefore, the WUS received by the WUR may be different, in terms of modulation scheme, waveform, etc., from a signal defined in relevant standards and carried by a physical downlink control channel (PDCCH). The WUS is mainly an envelope signal obtained by performing amplitude shift keying (ASK) modulation on a carrier signal. Demodulation of the envelope signal can be performed by a low-power circuit driven by energy provided by a radio frequency (RF) signal, therefore, the WUR may operate passively. The WUR may be actively powered by the terminal device. Regardless of the power supply manner, the power consumption of the WUR is greatly reduced compared with that of traditional receivers. For example, the WUR can achieve power consumption of less than 1 milliwatt (mW), which is much lower than tens to hundreds of milliwatts typically consumed by a main radio. The WUR may be integrated into the terminal device as an additional module of the receiver of the terminal device, or may exist independently as a wake-up function module of the terminal device.

As illustrated in FIG. 1, in an initial state, the WUR 110 is in an on state, and the main radio 120 is in an off state. The WUR 110 receives a WUS and determines whether to wake up the main radio 120 according to an indication in the WUS. If the main radio 120 needs to be woken up, the network device may send a WUS to the WUR 110, and the WUR 110 wakes up the main radio 120 upon receiving the WUS. Otherwise, the main radio 120 remains in the off state.

In some embodiments, when a WUS is sent, it indicates waking up; and when no WUS is sent, it indicates not waking up.

In some embodiments, when a WUS carrying a wake-up indication is sent, the WUS indicates waking up; and when a WUS carrying a not-wake-up indication is sent, the WUS indicates not waking up.

On-off keying (OOK) modulation is introduced in the following.

A signal received by the WUR 110 may be referred to as a WUR signal. A relatively simple modulation scheme may be used for a WUR signal to meet reception conditions of the WUR 110 with ultra-low power consumption and extremely low complexity. A WUS is a type of WUR signal. A WUR signal is generated by OOK modulation. A principle of OOK modulation is to modulate an amplitude of a carrier signal to a non-zero value and a zero value, which are respectively corresponding to "On" and "Off", to represent an information bit. OOK is also known as binary amplitude shift keying (2ASK).

FIG. 2 is a schematic diagram illustrating OOK modulation provided by the related art. A WUR encoder 210 converts information bits into a corresponding on-waveform generation (On-WG) signal and a corresponding off-waveform generation (Off-WG) signal. The On-WG signal represents "1", and the Off-WG signal represents "0". A window 220 is used to control a duration of the On-WG signal and a duration of the Off-WG signal, so that each bit can be transmitted within an appropriate time period. An analog and radio frequency module 230 is configured to convert the On-WG signal and the Off-WG signal into an analog signal and perform radio frequency modulation.

The above OOK signal is generated by multi-carrier (MC), and is therefore referred to as a multi-carrier on-off keying (MC-OOK) signal. The MC-OOK signal may be generated through multi-carrier modulation, such as orthogonal frequency division multiplexing (OFDM) modulation, which can maintain good compatibility with a related OFDM system.

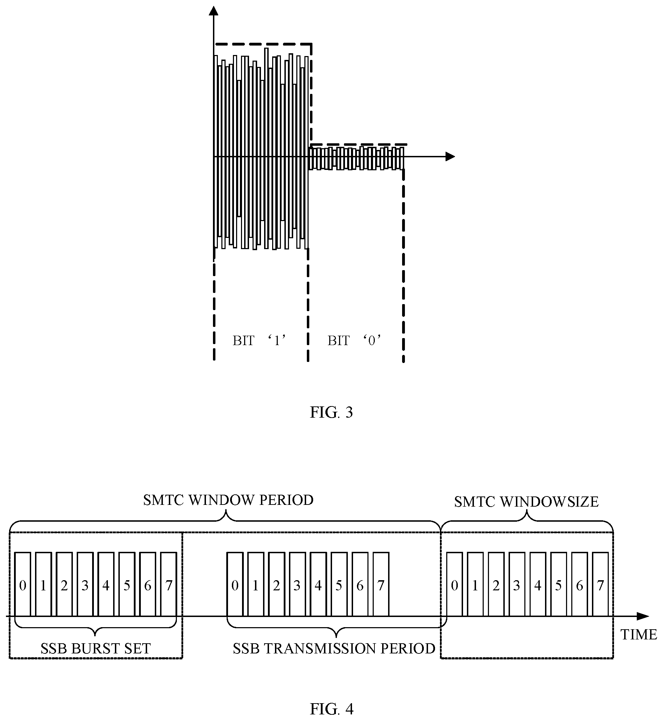

FIG. 3 is a schematic diagram of an MC-OOK signal provided by the related art. By mapping corresponding amplitude values to multiple subcarriers in the frequency domain and by performing inverse discrete Fourier transform (IDFT), a time-domain signal waveform approximating a waveform formed by ASK modulation can be obtained, where bit 1 is represented by a high level of a signal, and bit 0 is represented by a low level of a signal.

Radio resource management (RRM) measurement is introduced in the following.

For a wireless communication system, accurate measurement of cell quality and beam quality is the basis for effective performing of radio resource management and mobility management. For 5G NR, synchronization signal blocks (SSBs) and channel state information reference signals (CSI-RSs) are mainly used as measurement reference signals.

An SSB measurement timing configuration (SMTC) refers to time-domain resource configuration information for SSB measurement, which is mainly used to configure a set of SMTC windows for SSB measurement. Through a parameter configuration, a parameter(s) of the SMTC window, such as a size, a position, a period, etc., can be adjusted.

FIG. 4 is a schematic diagram of an SMTC provided by the related art. Exemplarily, an SSB set in each SMTC window includes 8 SSBs, for example, an SSB burst set includes 8 SSBs being numbered from 0 to 7. The size of each SMTC window is 5 milliseconds. An SMTC window period from the first SMTC window to the second SMTC window, is 40 milliseconds. An SSB transmission period is 20 milliseconds.

When a terminal device performs measurement, a set of SMTC configurations is configured for each frequency point to indicate available measurement window information on the frequency point. However, this constraint is gradually relaxed. In order to accommodate different SSB periods corresponding to different cells, it is allowed to configure two sets of SMTC configurations for intra-frequency measurement in a connected mode for measurement of a specified cell(s). For example, in addition to the basic SMTC configuration, another set of relatively dense measurement windows can be configured for use by a serving cell and a cell(s) indicated in a specified cell list. For measurement in an idle mode, the maximum number of SMTC configurations on each frequency point is increased to two to further meet the flexibility of network operation.

High-layer signaling may indicate specific configuration information of a measurement reference signal through a ReferenceSignalConfig parameter. For SSB-based measurement, an SSB-ToMeasure indicates position information of actually transmitted SSBs in an SSB burst set through a bitmap. The terminal device can know that an SSB candidate position where an SSB is actually transmitted and an SSB candidate position where an SSB is not transmitted through SSB-ToMeasure. The terminal device does not need to perform measurement on an SSB candidate position where an SSB is not transmitted, thereby reducing power consumption of the terminal device.

For CSI-RS-based measurement, the network device may configure one or more CSI-RS resources through high-layer signaling for the terminal device to perform measurement. With a cell as the unit, high-layer signaling may provide a cell-level CSI-RS configuration parameter(s), such as a cell identity (ID), a measurement bandwidth of a cell, a resource density, and other information. In addition, since each cell may be configured with multiple CSI-RS resources, the parameter configuration may also provide configuration information of each CSI-RS resource, such as a specified CSI-RS index, a time-domain position and a frequency-domain position occupied by the CSI-RS resource, a sequence generation method, etc.

Mobility management performed by a terminal device is introduced in the following.

Mobility management performed by the terminal device in an NR system includes mobility management in RRC_IDLE or RRC_INACTIVE, and mobility management in RRC_CONNECTED. The mobility management in RRC_IDLE or RRC_INACTIVE includes cell selection and cell reselection, and the mobility management in RRC_CONNECTED includes a handover process in RRC_CONNECTED.

### 1. Mobility Management in RRC_IDLE or RRC_INACTIVE

For a terminal device in RRC_IDLE or in RRC_INACTIVE, camping on a certain cell requires that signal quality of the cell satisfies an S criterion for cell selection, i.e., for the cell, corresponding received signal power Sᵣₓₗₑᵥ > 0 dB, and corresponding received signal quality S_{qual} > 0 dB. The signal quality of a cell includes measurement results of reference signal received power (RSRP) and reference signal received quality (RSRQ). After the terminal device selects a suitable cell, the terminal device continues cell reselection evaluation. Measurements for cell reselection evaluation are classified and performed according to reselection priorities of respective frequency points, which is specifically as follows.
(1) For a high-priority frequency point, neighbor cell measurement is always performed.
(2) For an intra-frequency frequency point, when both the RSRP value and the RSRQ value of a serving cell are greater than an intra-frequency measurement threshold configured by the network device, the terminal device may stop intra-frequency neighbor cell measurement. Otherwise, measurement needs to be performed.
(3) For an equal-priority frequency point and a lower-priority frequency point, when both the RSRP value and the RSRQ value of the serving cell are greater than the inter-frequency measurement threshold configured by the network device, the terminal device may stop neighbor cell measurements on the equal-priority frequency point and the lower-priority frequency point. Otherwise, measurement needs to be performed.

After obtaining multiple candidate cells through measurement, the process of determining a target cell for cell reselection is similar to that of the LTE system, following the principle of prioritizing cells on a high-priority frequency point, which is specifically as follows.
(1) For cell reselection on a high-priority frequency point, the signal quality of a candidate cell is required to exceed a certain threshold for a specified duration, and the terminal device has camped on a source cell for not less than 1 second.
(2) For cell reselection on an intra-frequency frequency point and an equal-priority frequency point, an R criterion (ranking according to RSRP) needs to be satisfied, signal quality of a new cell is required to be better than signal quality of a current cell for a specified duration, and the terminal device has camped on the source cell for not less than 1 second.
(3) For cell reselection on a lower-priority frequency point, it is required that no cells on higher-priority frequency points or on equal-priority frequency points meet the requirements, the signal quality of the source cell is lower than a certain threshold, the signal quality of a cell on the lower-priority frequency point exceeds a certain threshold for a specified duration, and the terminal device has camped on the source cell for not less than 1 second.

During cell reselection on an intra-frequency frequency point and an equal-priority frequency point, when multiple candidate cells meet the requirements, the LTE system may select the best cell as the target cell for reselection by means of RSRP ranking. In the NR system, since the terminal device accesses a cell through beams, in order to increase the probability of successful access by the terminal device through good beams during access, it is necessary to consider both cell signal quality and the number of good beams when determining a target cell. To achieve this goal, in the NR system, before selecting the target cell, multiple best cells with similar signal quality may be first selected, and then a cell with the largest number of good beams is selected as the target cell.

### 2. Mobility Management in RRC_CONNECTED

The mobility management performed by a terminal device in RRC_CONNECTED is mainly implemented through a network-controlled handover process. The NR system inherits the handover process of the LTE system, mainly including three stages: handover preparation, handover execution, and handover completion.

Taking the network device as a base station and the terminal device as a user equipment (UE) as an example for explanation, at a handover preparation stage, after a source base station receives a measurement report sent by the UE, the source base station makes a handover decision and initiates a handover request to a target base station. If a target cell accepts the handover request, the target cell sends a handover response message to the source base station via an inter-base station interface, where the handover response message contains configuration information for the target cell, i.e., a handover command.

At a handover execution stage, the source base station sends the handover command to the UE. Upon receiving the handover command, the UE disconnects from the source cell, starts to establish downlink (DL) synchronization with the target cell, then initiates random access to the target cell using a random access resource(s) configured in the handover command, and reports a handover complete message when random access is completed. During the process of the UE accessing the target cell, the source base station forwards data packets from a user plane function (UPF) to the target base station, and sends to the target base station status information of uplink (UL) and DL data packet transmission and reception in the source cell before forwarding.

At a handover completion stage, the target base station sends a path switch request to an access and mobility management function (AMF), requesting the AMF to switch the data packet transmission path from UPF-to-access network to UPF-to-target base station. Once the AMF responds to the request, it indicates that path switch succeeds, and the target base station can instruct the source base station to release context information of the UE. At this point, the entire connection of the UE is switched to the target cell.

An RRM measurement relaxation mechanism is introduced in the following.

A terminal device not in the connected mode needs to perform RRM measurement on a serving cell and other neighbor cells based on configuration from a network device to support mobility operations, such as cell reselection. To reduce power consumption of the terminal device, when the channel quality of the serving cell measured by the terminal device is relatively good, the terminal device may not start RRM measurement for intra-frequency frequency points, as well as inter-frequency/inter-radio access technology (inter-RAT) frequency points of equal priority or lower priority; meanwhile, for RRM measurement for inter-frequency/inter-RAT frequency points of higher priority, a measurement interval can be increased, which is specifically as follows.
(1) When an RSRP of the serving cell measured by the terminal device is greater than SIntraSearchP, and an RSRQ of the serving cell measured by the terminal device is greater than SIntraSearchQ, the terminal device may not start RRM measurement for neighbor cells on intra-frequency frequency points. SIntraSearchP and SIntraSearchQ are threshold parameters configured by the network device.
(2) When the RSRP of the serving cell measured by the terminal device is greater than SnonIntraSearchP, and the RSRQ of the serving cell measured by the terminal device is greater than SnonIntraSearchQ, the terminal device may not start RRM measurement for neighbor cells on inter-frequency/inter-RAT frequency points of equal priority or lower priority. SnonIntraSearchP and SnonIntraSearchQ are threshold parameters configured by the network device. Meanwhile, for the inter-frequency/inter-RAT frequency points of higher priority, the terminal device may adopt an RRM measurement relaxation mechanism.

For a terminal device that needs to perform RRM measurement on neighbor cells, an RRM measurement relaxation mechanism for neighbor cells is adopted to further meet requirements on power saving of the terminal device.

An RRM measurement relaxation criterion is introduced for RRM measurement performed by the terminal device, including: a "terminal device is not-at-cell-edge" criterion and a "low mobility" criterion. Both criteria are evaluated based on "cell-level" measurement results of the serving cell measured by the terminal device. These two criteria are introduced separately below.

### 1. "Terminal device is not-at-cell edge" criterion

For this criterion, the network device configures an RSRP threshold. When the RSRP of the serving cell measured by the terminal device is greater than the RSRP threshold, it is considered that the terminal device satisfies the "terminal device is not-at-cell-edge" criterion.

The network device may also configure an RSRP threshold and an RSRQ threshold. When the RSRP of the serving cell measured by the terminal device is greater than the RSRP threshold, and the RSRQ of the serving cell measured by the terminal device is greater than the RSRQ threshold, it is considered that the terminal device satisfies the "terminal device is not-at-cell-edge" criterion.

The RSRP threshold configured by the network device needs to be less than SIntraSearchP and SnonIntraSearchP. If the network device also configures an RSRQ threshold, the RSRQ threshold needs to be less than SIntraSearchQ and SnonIntraSearchQ.

### 2. "Low mobility" criterion

For this criterion, the network device configures a duration for evaluating RSRP variation, TSearchDeltaP, and a threshold for RSRP variation, SSearchDeltaP. When the RSRP variation of the serving cell measured by the terminal device within a period of time (TSearchDeltaP) is less than SSearchDeltaP, the terminal device is considered to satisfy the "low mobility" criterion.

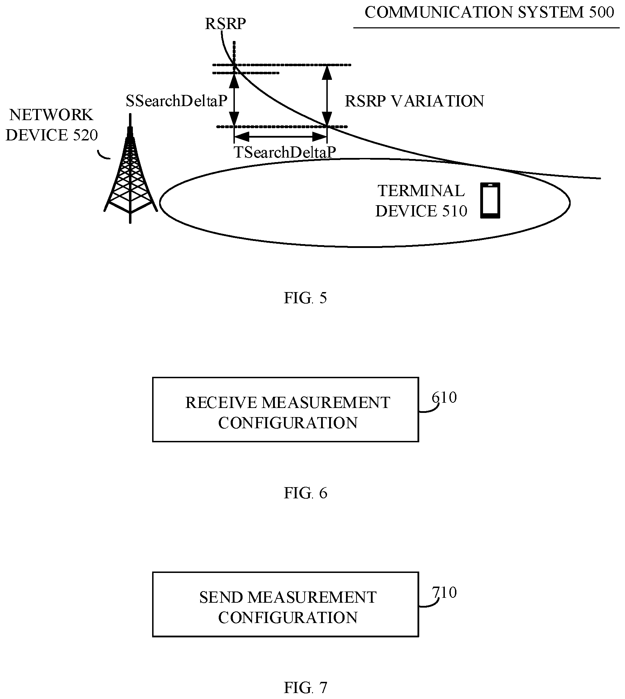

FIG. 5 is a schematic diagram illustrating a low mobility criterion provided by the related art. This criterion is applied in a communication system 500, which includes a terminal device 510 and a network device 520.

The terminal device 510 in the disclosure may also be referred to as a UE, an access terminal, a subscriber unit, a subscriber station, a mobile station, a remote station, a remote terminal, a mobile device, a user terminal, a terminal, a wireless communication device, a user agent, or a user device. The terminal device includes, but is not limited to: a handheld device, a wearable device, a vehicle-mounted device, an IoT device, etc., such as a mobile phone, a pad, an e-book reader, a laptop portable computers, desktop computer, a television, a game console, a mobile internet device (MID), an augmented reality (AR) terminal, a virtual reality (VR) terminal, a mixed reality (MR) terminal, a wearable device, a handle, an electronic tag, a controller, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLL) stations, a personal digital assistant (PDA), a set top box (STB), a customer premise equipment (CPE), etc.

The network device 520 in the disclosure provides a wireless communication function. The network device 520 includes, but is not limited to: an evolved node B (eNB), a radio network controller (RNC), a node B (NB), a base station controller (BSC), a base transceiver station (BTS), a home base station (e.g., a home evolved node B, or a home node B (HNB)), a baseband unit (BBU), an access point (AP) in a Wi-Fi system, a wireless relay node, a wireless backhaul node, a transmission point (TP) or a transmission and reception point (TRP), etc. It may also be a next generation Node B (gNB) or a transmission point (TRP or TP) in a 5G mobile communication system, or one or a group of antenna panels (including multiple antenna panels) of a base station in the 5G system, or may also be a network node forming a gNB or a transmission point, such as a BBU or a distributed unit (DU), etc., or a base station in a beyond-5G (B5G) mobile communication system, a 6G mobile communication system, etc., or a core network (CN), a fronthaul, a backhaul, a radio access network (RAN), a network slice, etc., or a serving cell, a primary cell (PCell), a primary secondary cell (PSCell), a special cell (SpCell), a secondary cell (SCell), a neighbor cell of the terminal device, etc.

The terminal device 510 and the network device 520 communicate with each other via a certain air interface technology, such as a Uu interface.

Exemplarily, there are two communication scenarios between the terminal device 510 and the network device 520: an UL communication scenario and a DL communication scenario. UL communication refers to that the terminal device 510 sends a signal to the network device 520; and DL communication refers to that the network device 520 sends a signal to the terminal device 510.

The technical solutions provided in embodiments of the disclosure may be applicable to various communication systems, for example: a GSM system, a CDMA system, a WCDMA system, a GPRS, an LTE system, an LTE-A system, an LTE frequency division duplex (FDD) system, an LTE time-division duplex (TDD) system, a UMTS, a worldwide interoperability for microwave access (WiMAX) communication system, a 5G mobile communication system, an NR system, an evolved system of NR system, an LTE-U system, an NR-U system, an NTN system, a non-NTN system, a WLAN, a Wi-Fi, a cellular IoT system, a cellular passive IoT system. It may also be applicable to a subsequent evolved system of the 5G NR system, and may also be applicable to B5G, 6G and subsequent evolved system.

In some embodiments of the disclosure, "NR" may also be referred to as a 5G NR system or a 5G system. The 5G mobile communication system may include non-standalone (NSA) networking and/or standalone (SA) networking.

The technical solutions provided in embodiments of the disclosure may also be applicable to machine type communication (MTC), LTE-machine (LTE-M), a device-to-device (D2D) network, a machine-to-machine (M2M) network, an IoT network, or other networks. The IoT network may include, for example, internet of vehicles. The communication mode in the internet of vehicles system is collectively referred to as vehicle-to-X (V2X, where X can represent everything). For example, the V2X may include vehicle-to-vehicle (V2V) communication, vehicle-to-infrastructure (V2I) communication, vehicle-to-pedestrian (V2P) communication, or vehicle-to-network (V2N) communication, etc.

As illustrated in FIG. 5, when the RSRP variation of the serving cell measured by the terminal device 510 within TSearchDeltaP is greater than SSearchDeltaP, the terminal device 510 is considered not satisfying the "low mobility" criterion.

In the relevant standards, by introducing a second SSearchDeltaP and a second TSearchDeltaP, further relaxation of measurement for low-mobility terminal devices (e.g., stationary terminal devices or quasi-stationary terminal devices) is supported. After the terminal device completes cell selection/reselection, the terminal device needs to perform normal RRM measurement for at least a period of time (TSearchDeltaP).

For RRM measurement for equal-priority frequency point or lower-priority frequency point, RRM measurement relaxation manners are respectively defined for different RRM measurement relaxation criteria, which are specifically as follows.
(1) When the terminal device satisfies the "low mobility" criterion, a relatively long measurement interval is used when the terminal device performs RRM measurement for neighbor cells, and a fixed scaling factor is used to increase the measurement interval.
(2) When the terminal device satisfies the "terminal device is not-at-cell-edge" criterion, a relatively long measurement interval is used when the terminal device performs RRM measurement for neighbor cells, and a fixed scaling factor is used to increase the measurement interval.
(3) When the terminal device satisfies both the "low mobility" criterion and the "terminal device is not-at-cell-edge" criterion, measurement intervals for intra-frequency frequency points, inter-frequency frequency points, and inter-RAT frequency points are all increased to 1 hour.

For the terminal device having a WUR and a main radio, in order to perform PDCCH detection, the main radio needs to be activated. By introducing a WUS, power consumption of the main radio can be reduced. In addition to PDCCH detection, the main radio also needs to be activated periodically to perform RRM measurement. However, power saving achieved by using a WUS relies on activating a WUR to receive a WUS and then activating the main radio, to reduce power consumption of the main radio. If the main radio is activated periodically to perform RRM measurement, power consumption cannot be effectively reduced. To this end, a method in which a WUR is used instead of the main radio to perform RRM measurement, is provided in embodiments of the disclosure.

Performing RRM measurement through a WUR may refer to that the WUR performs RRM measurement through signals such as SSBs or CSI-RSs, which requires that the WUR can detect OFDM signals, thus imposing relatively high complexity on the WUR. A low-power WUR (LP-WUR) with low power consumption and low complexity has more advantages in power saving. Signals received by the LP-WUR have waveforms with low demodulation complexity, such as waveforms of OOK and frequency shift keying (FSK) signals. Signals associated with the LP-WUR are referred to as low-power WUSs (LP-WUSs), for example, low-power synchronization signals (LP-SSs) used for synchronization. Taking LP-SSs as an example, when the LP-WUR performs RRM measurement by detecting the quality of LP-SSs, the terminal device needs to receive a measurement configuration associated with LP-SSs, so that the terminal device can obtain an RRM measurement result through detecting LP-SSs via the LP-WUR of the terminal device.

FIG. 6 is a flow chart of a method for measurement configuration transmission provided by an exemplary embodiment of the disclosure. The method is performed by a terminal device. The terminal device includes a first receiver and a second receiver. Operating power consumption of the first receiver is lower than operating power consumption of the second receiver. The method includes the following.

Step 610, a measurement configuration is received.

The measurement configuration includes a configuration for the first receiver to perform radio resource management (RRM) measurement.

In some embodiments, the first receiver is an LP-WUR or a WUR, and the second receiver is a main radio.

In the related art, when the terminal device is in a radio resource control (RRC) connected mode (RRC_CONNECTED), the terminal device performs RRM measurement using the main radio. A signal used for RRM measurement is configured by a network device through RRC signaling, for example, RRM measurement that the terminal device needs to perform, including at least one of intra-frequency measurement, inter-frequency measurement, or inter-RAT measurement, is configured through a measurement parameter (MeasConfig). The measurement parameter includes a MeasObject configuration, which is used to configure at least one of the following: frequency-domain position information of a relevant signal for the terminal device to perform RRM measurement, time-domain position information of a relevant signal for the terminal device to perform RRM measurement, beam information of a relevant signal for the terminal device to perform RRM measurement, cell list information of a relevant signal for the terminal device to perform RRM measurement, or measurement threshold information of a relevant signal for the terminal device to perform RRM measurement.

RRM measurement configuration in RRC_CONNECTED

In some embodiments, receiving the measurement configuration includes receiving a first measurement configuration. The first measurement configuration is an RRM measurement configuration configured for the terminal device in RRC_CONNECTED.

By receiving the first measurement configuration, a measurement task to be performed by the terminal device in RRC_CONNECTED, such as dynamic handover based on network quality, mobility management based on network quality, and radio resource optimization based on network quality, can be specified. This allows distinguishing the measurement task to be performed by the terminal device in RRC_CONNECTED from a measurement task to be performed by a terminal device in an RRC idle mode (RRC_IDLE) or an RRC inactive mode (RRC_INACTIVE), thereby improving measurement flexibility.

In some embodiments, the first measurement configuration includes at least one of: a frequency-domain position of a first RRM measurement signal; a frequency-domain bandwidth of the first RRM measurement signal; sequence information of the first RRM measurement signal; a time-domain position of the first RRM measurement signal; a symbol length of the first RRM measurement signal; a bit rate of the first RRM measurement signal; a measurement threshold of the first RRM measurement signal; a measurement offset of the first RRM measurement signal; or a cell list corresponding to the first RRM measurement signal. The first RRM measurement signal is an RRM measurement signal detectable by the first receiver in RRC_CONNECTED.

Through the above first measurement configuration, relevant information of the first RRM measurement signal can be accurately obtained, thereby improving an accuracy of configuring the first RRM measurement signal.

In some embodiments, the first RRM measurement signal includes a low-power synchronization signal (LP-SS).

In some embodiments, the first RRM measurement signal includes at least one of an OOK signal, an MC-OOK signal, or an FSK signal.

In some embodiments, the first receiver of the terminal device in RRC_CONNECTED needs to measure a first RRM measurement signal of a neighbor cell(s), for example, the LP-WUR of the terminal device needs to measure an LP-SS of a neighbor cell(s).

In some embodiments, the frequency-domain position of the first RRM measurement signal includes an absolute radio frequency channel number (ARFCN) corresponding to the frequency-domain position of the first RRM measurement signal.

The ARFCN is a number used to identify a radio channel in a network, mainly used to indicate a channel frequency used by the terminal device in the network. Exemplarily, the ARFCN refers to a center frequency of a frequency-domain bandwidth occupied by the first RRM measurement signal.

By using an ARFCN defined in the international standard to indicate the frequency-domain position of the first RRM measurement signal, the frequency-domain position of the first RRM measurement signal can be uniformly identified across different systems, and is easy to be configured and managed.

In some embodiments, the frequency-domain bandwidth of the first RRM measurement signal is in a unit of megahertz (MHz) or kilohertz (KHz), or is in a unit of a resource block (RB).

Representing the frequency-domain bandwidth in the unit of MHz or KHz is more intuitive and easier to understand, while representing the frequency-domain bandwidth in the unit of RB can simplify the illustration and calculation of the frequency-domain bandwidth. Different units can be used according to specific scenarios, so that the most suitable unit can be selected to represent the frequency-domain bandwidth.

In some embodiments, the sequence information of the first RRM measurement signal includes a time-domain sequence of the first RRM measurement signal.

In some embodiments, the first RRM measurement signal includes at least one of an OOK signal or an MC-OOK signal, and the time-domain sequence is a sequence used in OOK modulation.

In an example where the first RRM measurement signal is an LP-SS and the first receiver is the LP-WUR, an On signal of an OOK waveform of the LP-SS can be generated through multi-carrier modulation. A sequence can be carried on multiple carriers, and a time-domain waveform corresponding to the sequence is demodulated as an On signal by the LP-WUR. The sequence includes at least one of a frequency-domain sequence or a time-domain sequence. Some high-capability LP-WURs can detect signals generated through multi-carrier modulation, such as OFDM signals.

By selecting appropriate sequence information, demodulation and detection on a receiving side (a terminal device side) are facilitated. By carrying a frequency-domain sequence and/or time-domain sequence on multiple carriers, the receiver can detect the frequency-domain sequence and/or time-domain sequence, thereby improving detection performance.

In some embodiments, the time-domain sequence of the first RRM measurement signal is associated with a cell ID.

Exemplarily, the time-domain sequence is associated with a physical cell identity (PCI) of a cell in the cell list.

The time-domain sequence of the first RRM measurement signal is associated with a cell ID, so that each cell has a unique time-domain sequence, and accordingly different cells can be accurately identified and distinguished.

In some embodiments, the sequence information of the first RRM measurement signal indicates a relevant parameter for generating the first RRM measurement signal. Exemplarily, in an example where the first RRM measurement signal is an LP-SS, the relevant parameter includes at least one of: a periodicity of the LP-SS, a duty cycle ratio of the LP-SS, an amplitude of the LP-SS, or a frequency of the LP-SS.

In some embodiments, the time-domain position of the first RRM measurement signal includes at least one of: a periodicity of a measurement time window; an offset of the measurement time window; or a duration of the measurement time window. By configuring the above, RRM measurement can be ensured to be performed at a specified time, and the duration of RRM measurement can be flexibly adjusted.

In some embodiments, the symbol length of the first RRM measurement signal is an integer multiple of an OFDM symbol length.

The symbol length of the first RRM measurement signal or the bit rate of the first RRM measurement signal is configured by the network device, which is more flexible compared with determining an OFDM symbol length through a subcarrier spacing. The symbol length of the first RRM measurement signal may be *N* times an OFDM symbol length, where *N* is a positive integer.

In some embodiments, the measurement threshold of the first RRM measurement signal includes at least one of: a reference signal received power (RSRP) threshold of the first RRM measurement signal; a reference signal received quality (RSRQ) threshold of the first RRM measurement signal; a signal to interference plus noise ratio (SINR) threshold of the first RRM measurement signal; a received signal strength indicator (RSSI) threshold of the first RRM measurement signal; or an energy detection threshold of the first RRM measurement signal.

By configuring the above thresholds, parameters of the first RRM measurement signal, such as the strength, quality, and stability, can be ensured, thereby adapting to different scenarios and requirements.

In some embodiments, the measurement offset of the first RRM measurement signal includes at least one of: measurement offset information of the first RRM measurement signal; or cell-specific measurement offset information corresponding to the first RRM measurement signal.

In the related art, a measurement offset (offsetMO) information element includes the following measurement offset parameters: rsrpOffsetSSB; rsrqOffsetSSB; and sinrOffsetSSB.

In an example where the first RRM measurement signal is an LP-SS, the measurement offset of the LP-SS includes at least one of the following measurement offset parameters: rsrpOffsetLPSS; rsrqOffsetLPSS; or sinrOffsetLPSS.

By configuring the measurement offset information of the first RRM measurement signal, the measurement process can be adjusted in the time domain to avoid conflicts with other services, thereby obtaining more accurate measurement data. By configuring the cell-specific measurement offset information corresponding to the first RRM measurement signal, a measurement offset can be configured individually for each cell to meet differences and requirements between different cells.

In some embodiments, the cell list corresponding to the first RRM measurement signal indicates a cell(s) that supports performing RRM measurement based on the first RRM measurement signal.

In some embodiments, the information in the cell list includes a PCI(s).

Different cells may differ in whether they support the first RRM measurement signal. Some cells support the first RRM measurement signal, while some cells do not support the first RRM measurement signal. The cell list corresponding to the first RRM measurement signal enables the terminal device to perform RRM measurement using a corresponding receiver based on whether different cells support the first RRM measurement signal.

The RRM measurement signal includes a synchronization signal and PBCH block (SSB), a channel state information - reference signal (CSI-RS), and the first RRM measurement signal. In an example where the first RRM measurement signal is an LP-SS, for some cells, only RRM measurement based on SSBs or CSI-RSs is supported; or, only RRM measurement based on LP-SSs is supported; or, both RRM measurement based on SSBs or CSI-RSs and RRM measurement based on LP-SSs are supported. The cell list corresponding to the first RRM measurement signal indicates a cell(s) that only supports RRM measurement based on LP-SSs, as well as a cell(s) that supports both RRM measurement based on SSBs or CSI-RSs and RRM measurement based on LP-SSs.

In some embodiments, the RRM measurement configuration of the terminal device in the RRC connected mode is as follows.

### - MeasConfig

The IE MeasConfig specifies measurements to be performed by the UE, and covers intra-frequency, inter-frequency and inter-RAT mobility as well as configuration of measurement gaps.

### MeasConfig information element

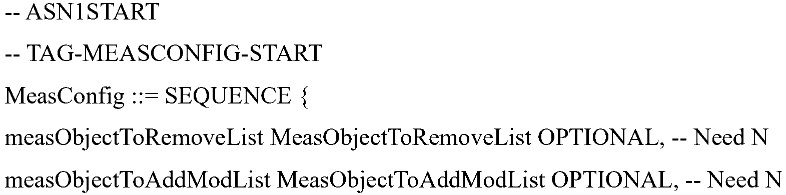

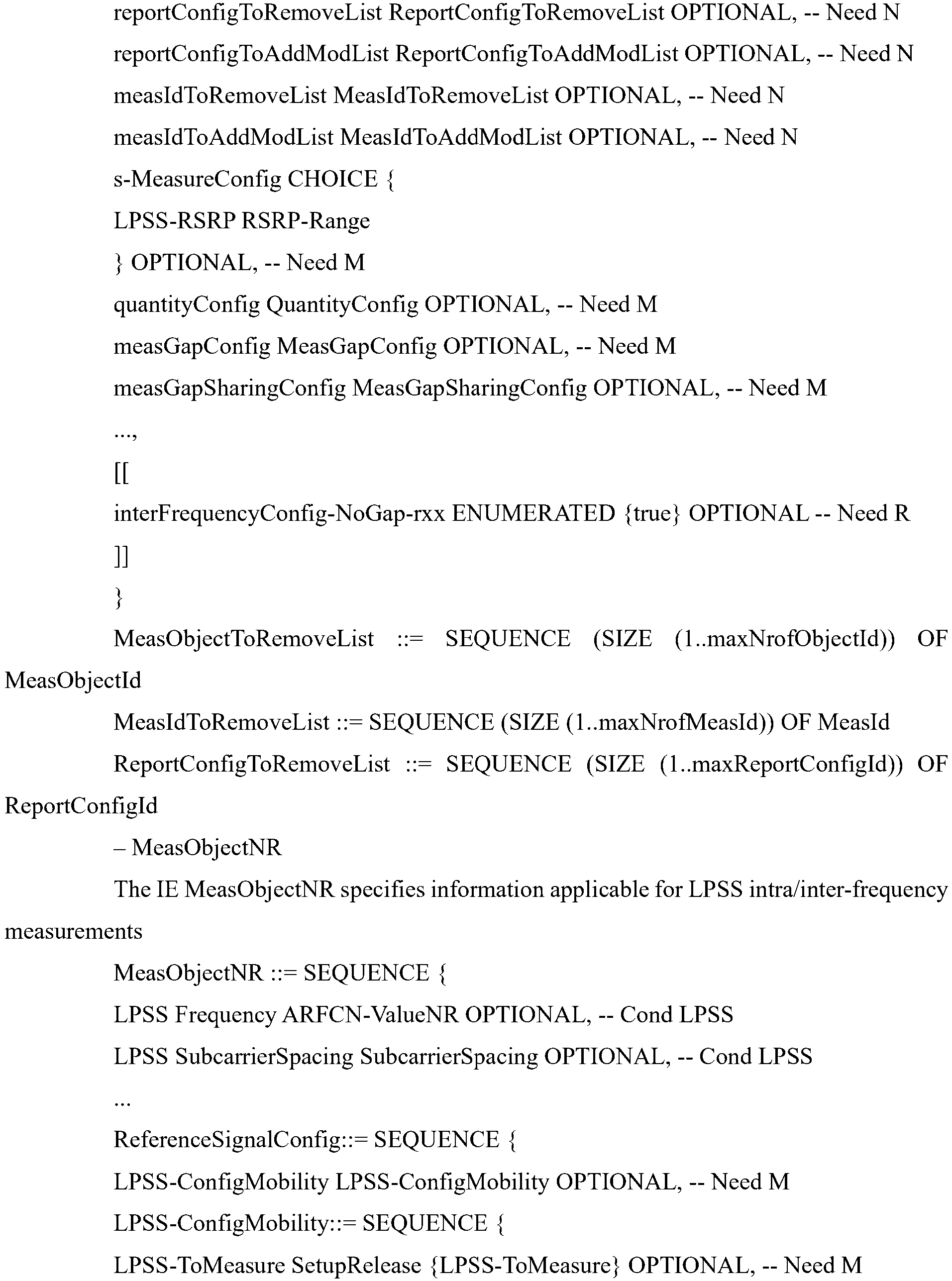

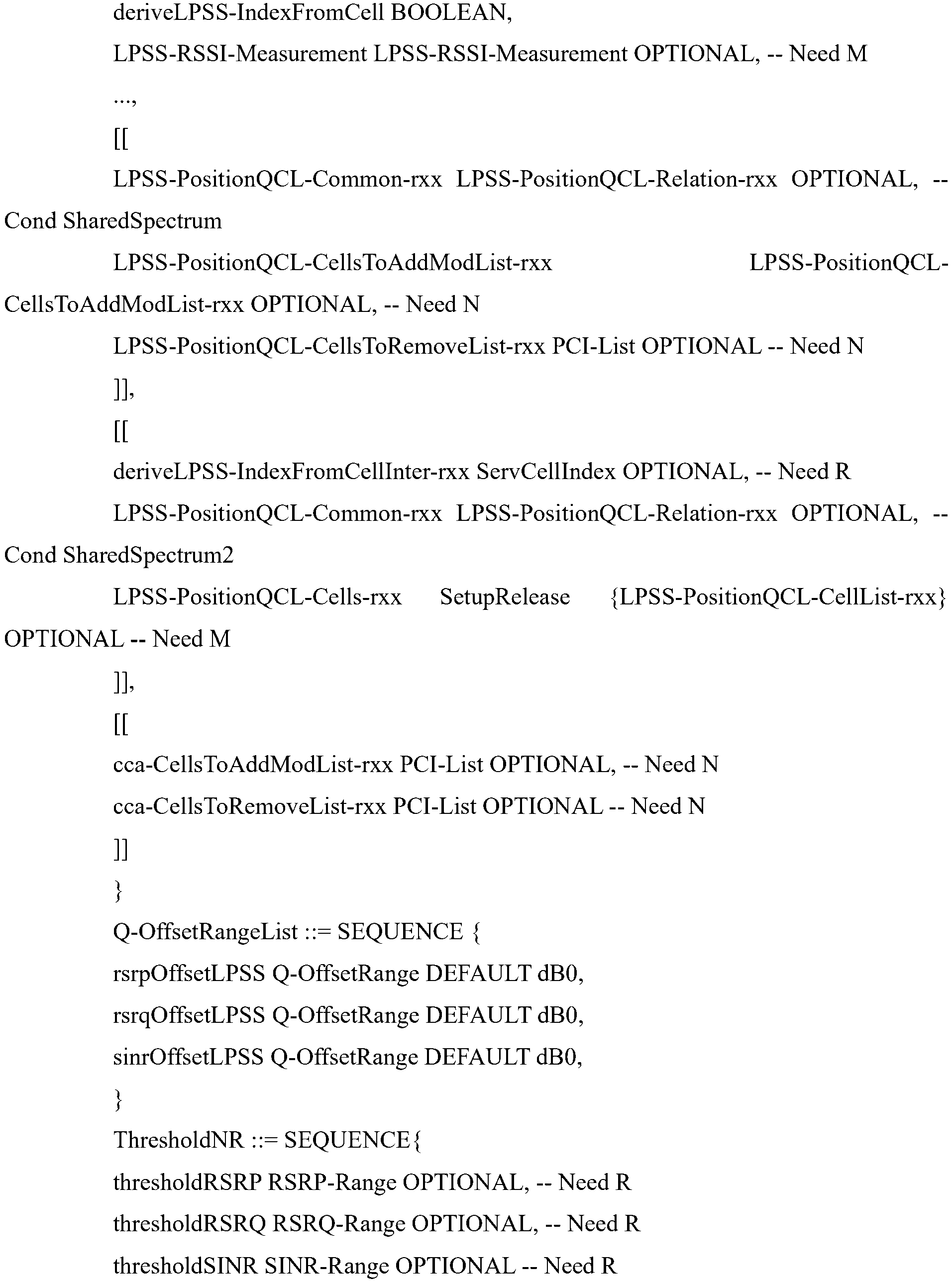

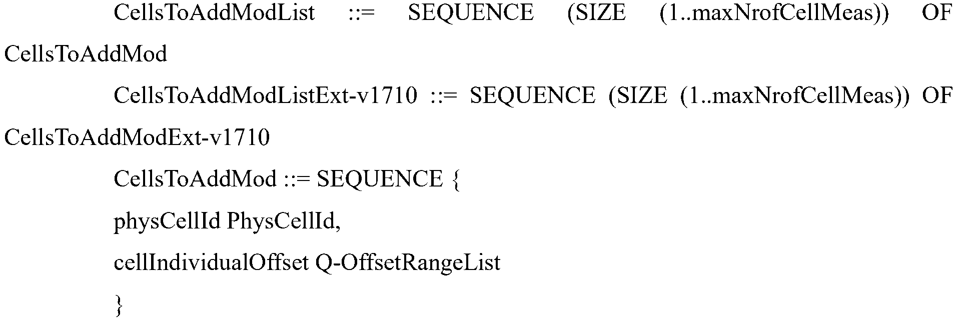

In the above RRM measurement configuration, *rxx* indicates a version number, such as r18, r19, r20, etc., and embodiments of the disclosure are not limited in this regard.

RRM measurement configuration in RRC_IDLE or RRC_INACTIVE

In some embodiments, receiving the measurement configuration includes receiving a second measurement configuration. The second measurement configuration is an RRM measurement configuration configured for the terminal device in RRC_IDLE or RRC_INACTIVE.

The first receiver of the terminal device in RRC_IDLE or RRC_INACTIVE needs to measure a second RRM measurement signal of a neighbor cell(s), and perform cell reselection according to a measurement result, so as to select a cell with a better measurement result to camp on.

By receiving the second measurement configuration, the measurement task to be performed by the terminal device in RRC_IDLE or RRC_INACTIVE, such as receiving neighbor cell information, measuring cell quality, etc., can be specified. This allows distinguishing the measurement task to be performed by the terminal device in RRC_IDLE or RRC_INACTIVE from the measurement task to be performed by the terminal device in RRC_CONNECTED, thereby improving measurement flexibility.

In some embodiments, the second measurement configuration includes at least one of: a carrier list; a measurement duration; or a validity area list.

The carrier list indicates a carrier(s) for measurement. The measurement duration indicates a duration of measurement, for example, sec10 indicates a measurement duration of 10 seconds, and sec30 indicates a measurement duration of 30 seconds. The validity area list indicates a carrier frequency and a validity cell list.

By configuring the above, a carrier that needs to be measured, a duration of each measurement, and an area range within which measurement can be performed, can be determined.

In some embodiments, the carrier list includes at least one of: a carrier frequency; a subcarrier spacing corresponding to a carrier; a frequency band list; a measurement result; a quality threshold; a measurement signal configuration; a measurement cell list; or a measurement signal quantity.

In some embodiments, an ARFCN corresponding to a carrier indicates a carrier frequency.

In some embodiments, the frequency band list indicates a frequency to which the second measurement configuration applies.

In some embodiments, the measurement result includes at least one of an RSRP or an RSRQ.

In some embodiments, the quality threshold (qualityThreshold) indicates a measurement cell quality threshold, and includes at least one of: an RSRP threshold of the second RRM measurement signal; or an RSRQ threshold of the second RRM measurement signal. The second RRM measurement signal is an RRM measurement signal detectable by the first receiver in RRC_IDLE or RRC_INACTIVE.

By configuring the above, specific information associated with a carrier for measurement can be determined, thereby improving the configuration accuracy.

In some embodiments, the measurement signal configuration includes at least one of: a time-domain position of the second RRM measurement signal; a frequency-domain position of the second RRM measurement signal; a frequency-domain bandwidth of the second RRM measurement signal; a beam configuration of the second RRM measurement signal; a symbol length of the second RRM measurement signal; or a measurement-beam measurement configuration of the second RRM measurement signal. The second RRM measurement signal is a measurement signal detectable by the first receiver. The measurement-beam measurement configuration of the second RRM measurement signal includes a beam measurement configuration.

Through the above measurement signal configuration, relevant information of the second RRM measurement signal can be accurately obtained, thereby improving an accuracy of configuring the second RRM measurement signal.

In some embodiments, the measurement cell list indicates a cell(s) for which measurement and reporting is to be performed.

The measurement cell list indicates a cell(s) for which measurement and reporting is to be performed in RRC_IDLE or RRC_INACTIVE, including a range of PCIs.

In some embodiments, the measurement cell list indicates a cell(s) that supports performing RRM measurement based on the second RRM measurement signal. The second RRM measurement signal is a measurement signal detectable by the first receiver.

Different cells may differ in whether they support the second RRM measurement signal. Some cells support the second RRM measurement signal, while some cells do not support the second RRM measurement signal. The cell list corresponding to the second RRM measurement signal enables the terminal device to perform RRM measurement using a corresponding receiver based on whether different cells support the second RRM measurement signal.

The RRM measurement signal includes an SSB, a CSI-RS, and the second RRM measurement signal. In an example where the second RRM measurement signal is an LP-SS, for some cells, only RRM measurement based on SSBs or CSI-RSs is supported; or, only RRM measurement based on LP-SSs is supported; or, both RRM measurement based on SSBs or CSI-RSs and RRM measurement based on LP-SSs are supported. The cell list corresponding to the second RRM measurement signal indicates a cell(s) that only supports RRM measurement based on LP-SSs, as well as a cell(s) that supports both RRM measurement based on SSBs or CSI-RSs and RRM measurement based on LP-SSs.

In some embodiments, the measurement signal quantity represents an average of measurement signals received within a specified time period.

By averaging measurement signals received within certain time units, the measurement signal quantity is obtained, and an average of measurement results corresponding to these measurement signals represents a cell measurement result.

By averaging the measurement signals, the influence of random errors can be reduced, thereby providing a more stable and reliable measurement signal quantity.

In some embodiments, the validity area list includes at least one of: a carrier frequency; or the validity cell list.

In some embodiments, a carrier frequency includes an ARFCN corresponding to a carrier. An ARFCN corresponding to a carrier indicates a carrier frequency.

In some embodiments, the validity cell list includes a range of PCIs.

For each carrier frequency, the terminal device performs RRM measurement on a cell(s) in the validity cell list.

By using an ARFCN defined in the international standard to indicate a carrier frequency, the carrier frequency can be uniformly identified and is easy to configure and manage. By configuring the validity cell list, RRM measurement can be performed for each cell on each carrier frequency.

In some embodiments, the method further includes performing RRM measurement through the first receiver based on the measurement configuration.

According to the above measurement configuration of the terminal device in RRC_CONNECTED or RRC_IDLE or RRC_INACTIVE, the terminal device can obtain a configuration associated with RRM measurement-related signals, so that RRM measurement can be performed through the first receiver, thereby reducing power consumption of the terminal.

In some embodiments, the RRM measurement configuration of the terminal device in the RRC idle mode or the RRC inactive mode is as follows.

### MeasIdleConfig

The IE MeasIdleConfig is used to convey information to UE about measurements requested to be done while in RRC_IDLE or RRC_INACTIVE.

### MeasIdleConfig information element

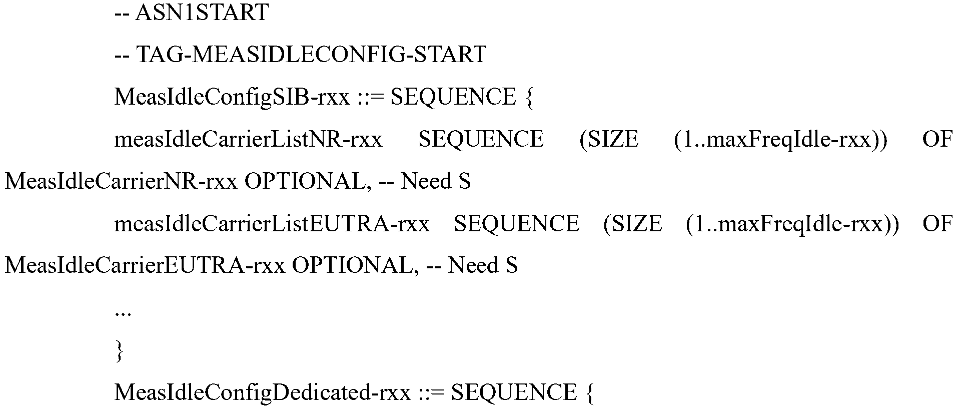

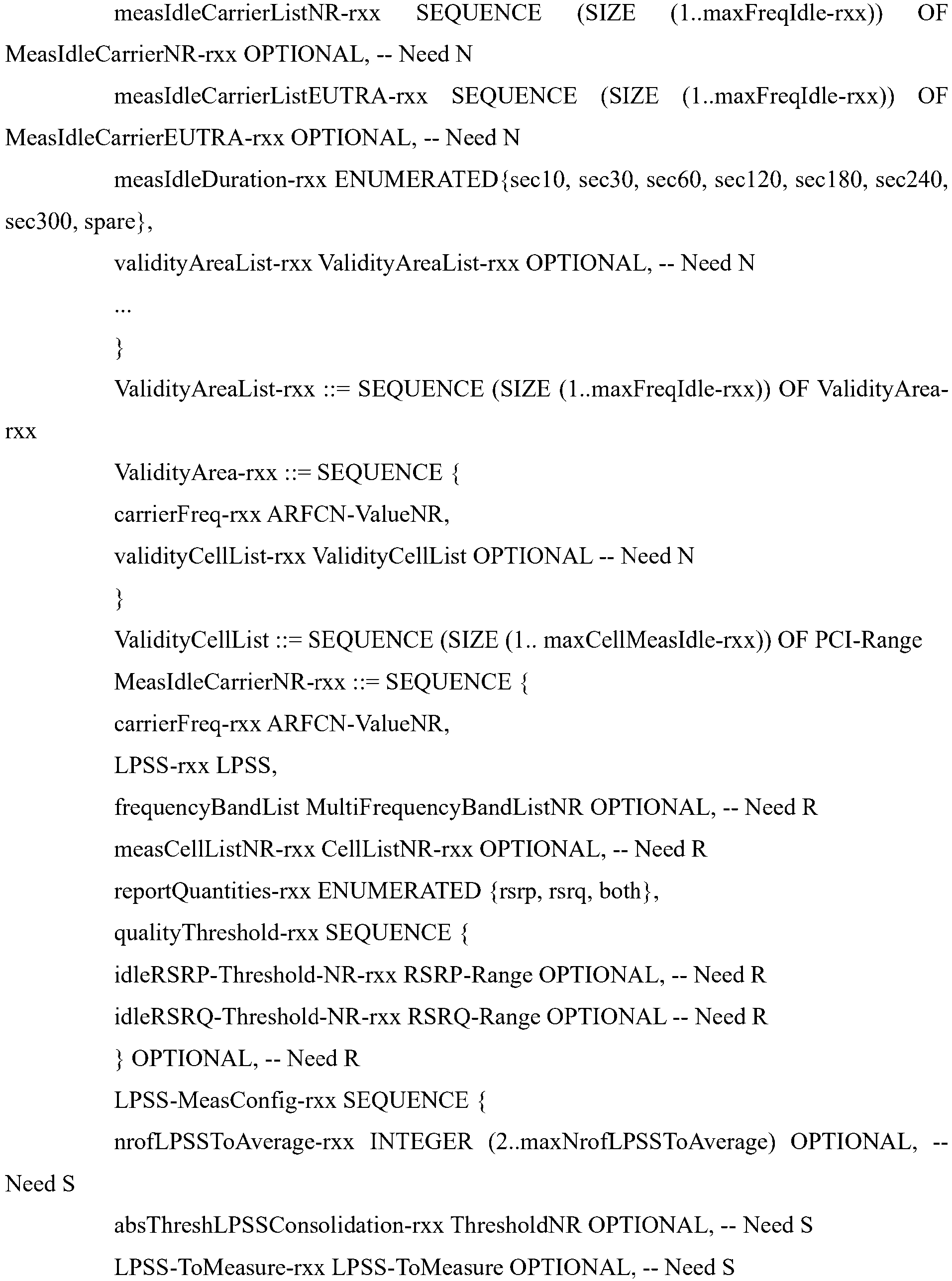

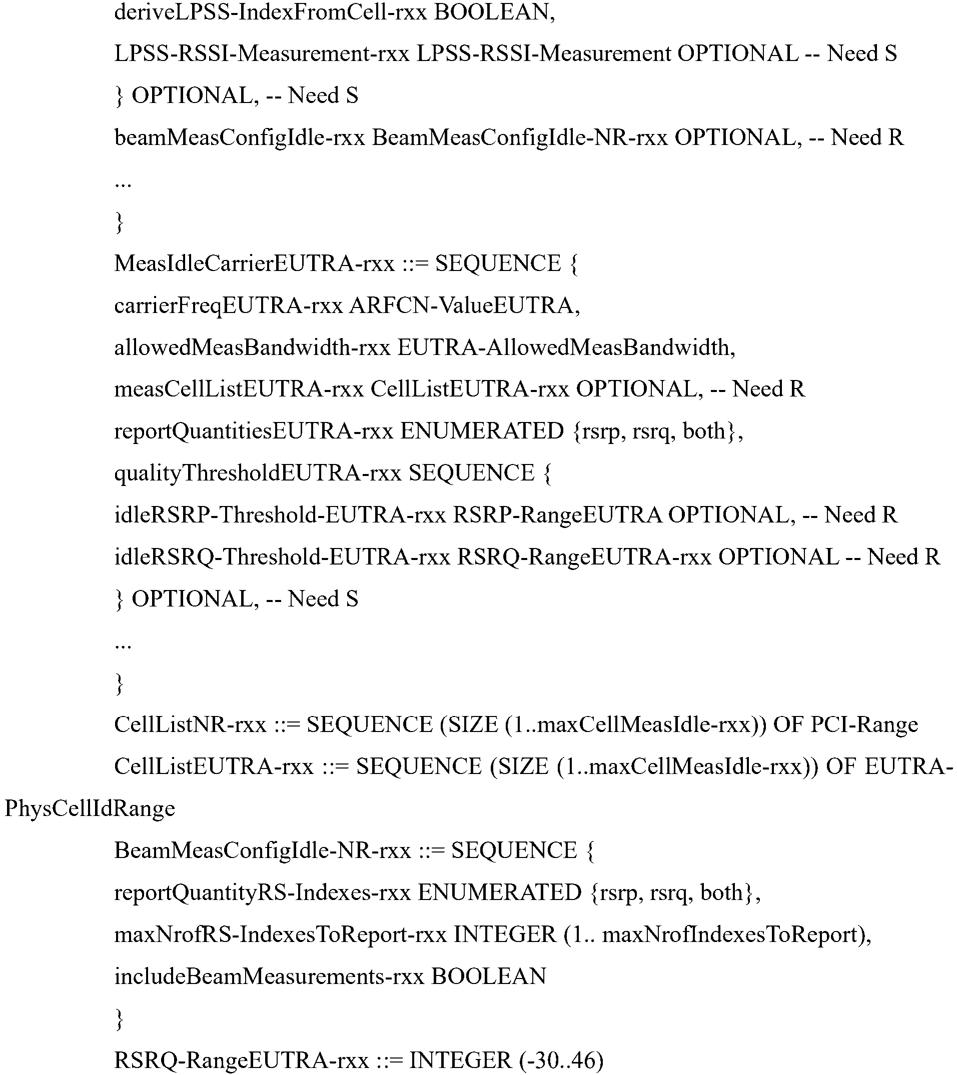

In the above RRM measurement configuration, *rxx* indicates the version number, such as r18, r19, r20, etc., and embodiments of the disclosure are not limited in this regard.

In summary, in the method provided in this embodiment, the measurement configuration is received, where the measurement configuration includes the configuration for the first receiver to perform RRM measurement, the terminal device includes the first receiver and the second receiver, and operating power consumption of the first receiver is lower than operating power consumption of the second receiver. The terminal device obtains the measurement configuration, so that the terminal device can perform RRM measurement using the first receiver, such as an LP-WUR, thereby reducing power consumption compared with performing RRM measurement using the second receiver, such as a main radio.

FIG. 7 is a flow chart of a method for measurement configuration transmission provided by an exemplary embodiment of the disclosure. The method is performed by a network device. The method includes the following.

Step 710, a measurement configuration is sent.

The measurement configuration includes a configuration for a first receiver to perform RRM measurement. A terminal device includes the first receiver and a second receiver. Operating power consumption of the first receiver is lower than operating power consumption of the second receiver.

In some embodiments, sending the measurement configuration includes sending a first measurement configuration. The first measurement configuration is an RRM measurement configuration configured for the terminal device in RRC_CONNECTED.

In some embodiments, the first measurement configuration includes at least one of: a frequency-domain position of a first RRM measurement signal; a frequency-domain bandwidth of the first RRM measurement signal; sequence information of the first RRM measurement signal; a time-domain position of the first RRM measurement signal; a symbol length of the first RRM measurement signal; a bit rate of the first RRM measurement signal; a measurement threshold of the first RRM measurement signal; a measurement offset of the first RRM measurement signal; or a cell list corresponding to the first RRM measurement signal. The first RRM measurement signal is an RRM measurement signal detectable by the first receiver in RRC_CONNECTED.

In some embodiments, the frequency-domain position of the first RRM measurement signal includes an ARFCN corresponding to the frequency-domain position of the first RRM measurement signal.

In some embodiments, the frequency-domain bandwidth of the first RRM measurement signal is in a unit of MHz or KHz, or is in a unit of an RB.

In some embodiments, the sequence information of the first RRM measurement signal includes a time-domain sequence of the first RRM measurement signal.

In some embodiments, the first RRM measurement signal includes at least one of an OOK signal or an MC-OOK signal, and the time-domain sequence is a sequence used in OOK modulation.

In some embodiments, the time-domain sequence of the first RRM measurement signal is associated with a cell ID.

In some embodiments, the time-domain position of the first RRM measurement signal includes at least one of: a periodicity of a measurement time window; an offset of the measurement time window; or a duration of the measurement time window.

In some embodiments, the symbol length of the first RRM measurement signal is an integer multiple of an OFDM symbol length.

In some embodiments, the measurement threshold of the first RRM measurement signal includes at least one of: an RSRP threshold of the first RRM measurement signal; an RSRQ threshold of the first RRM measurement signal; an SINR threshold of the first RRM measurement signal; an RSSI threshold of the first RRM measurement signal; or an energy detection threshold of the first RRM measurement signal.

In some embodiments, the measurement offset of the first RRM measurement signal includes at least one of: measurement offset information of the first RRM measurement signal; cell-specific measurement offset information corresponding to the first RRM measurement signal.

In some embodiments, the cell list corresponding to the first RRM measurement signal indicates a cell(s) that supports performing RRM measurement based on the first RRM measurement signal.

In some embodiments, sending the measurement configuration includes sending a second measurement configuration. The second measurement configuration is an RRM measurement configuration configured for the terminal device in RRC_IDLE or RRC_INACTIVE.

In some embodiments, the second measurement configuration includes at least one of: a carrier list; a measurement duration; or a validity area list.

In some embodiments, the network device sends only the first measurement configuration; alternatively, the network device sends only the second measurement configuration; alternatively, the network device sends both the first measurement configuration and the second measurement configuration.

In some embodiments, the carrier list includes at least one of: a carrier frequency; a subcarrier spacing corresponding to a carrier; a frequency band list; a measurement result; a quality threshold; a measurement signal configuration; a measurement cell list; or a measurement signal quantity.

In some embodiments, the quality threshold (qualityThreshold) indicates a measurement cell quality threshold, and includes at least one of: an RSRP threshold of a second RRM measurement signal; or an RSRQ threshold of the second RRM measurement signal. The second RRM measurement signal is an RRM measurement signal detectable by the first receiver in RRC_IDLE or RRC_INACTIVE.

In some embodiments, the measurement signal configuration includes at least one of: a time-domain position of a second RRM measurement signal; a frequency-domain position of the second RRM measurement signal; a frequency-domain bandwidth of the second RRM measurement signal; a beam configuration of the second RRM measurement signal; a symbol length of the second RRM measurement signal; or a measurement-beam measurement configuration of the second RRM measurement signal. The second RRM measurement signal is a measurement signal detectable by the first receiver. The measurement-beam measurement configuration of the second RRM measurement signal includes a beam measurement configuration.

In some embodiments, the measurement cell list indicates a cell(s) for which measurement and reporting is to be performed.

In some embodiments, the measurement cell list indicates a cell(s) that supports performing RRM measurement based on the second RRM measurement signal. The second RRM measurement signal is a measurement signal detectable by the first receiver.

In some embodiments, the measurement signal quantity represents an average of measurement signals received within a specified time period.

In some embodiments, the validity area list includes at least one of: a carrier frequency; or a validity cell list.

In some embodiments, a carrier frequency includes an ARFCN corresponding to a carrier.

In some embodiments, the validity cell list includes: a range of PCIs.

For specific implementation details of the above method for measurement configuration transmission, reference can be made to embodiments of the terminal device side, which is not repeated herein.

In summary, in the method provided in this embodiment, the measurement configuration is sent, where the measurement configuration includes the configuration for the first receiver to perform RRM measurement, the terminal device includes the first receiver and the second receiver, and operating power consumption of the first receiver is lower than operating power consumption of the second receiver. The terminal device obtains the measurement configuration, so that the terminal device can perform RRM measurement using the first receiver, such as an LP-WUR, thereby reducing power consumption compared with performing RRM measurement using the second receiver, such as a main radio.

In the above embodiments, the embodiment corresponding to FIG. 6 and the embodiment corresponding to FIG. 7 may be implemented separately or in combination, and the disclosure is not limited in this regard.

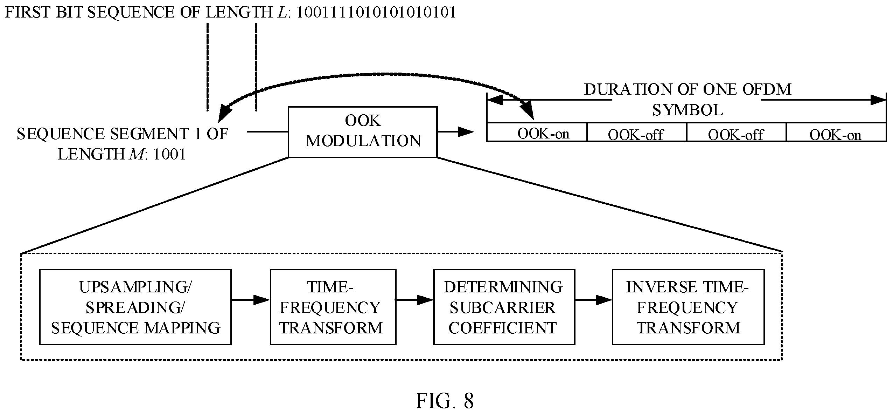

In the above embodiments, the first RRM measurement signal or the second RRM measurement signal, such as an LP-SS, includes at least one of an OOK symbol or an MC-OOK symbol. FIG. 8 is a schematic diagram illustrating generation of an MC-OOK symbol provided by an embodiment of the disclosure.

In some embodiments, a sending device (network device) obtains a to-be-sent sequence of length *L* corresponding to an LP-SS, and determines the number *M* of OOK symbols transmitted within a preset duration, where *M* is a positive integer. The sequence corresponding to the LP-SS is represented by a first bit sequence. The preset duration is determined by a basic time-domain unit in a cellular communication system or a WiFi system.

In some embodiments, the preset duration is *t* OFDM symbols, and *M* OOK symbols can be transmitted in the *t* OFDM symbols. *M* represents the number of OOK symbols transmitted in the *t* OFDM symbols, and *t* is a positive integer. In embodiments of the disclosure, transmitting *M* OOK symbols in 1 OFDM symbol is taken as an example for illustration.

In some embodiments, *M* may be agreed upon by a protocol, or may be configured by a network device, or may be determined by a terminal device based on a preset mapping relationship, thereby achieving variable rate transmission of OOK symbols.

The first bit sequence of length *L* is divided into at least one sequence segment of length *M.* In a case where *L* is an integer multiple of *M,* each sequence segment obtained by dividing the first bit sequence of length *L* is of length *M.* For example, the first bit sequence with a length of first quantity *L* is {1,0,0,1,1,1,1,0,1,0,1,0,1,0,1,0,1,0,1····}, and *M*=4, then the first bit sequence with a length of first quantity *L* is divided into multiple sequence segments, each of which is with a length of 4, for example, sequence segment 1 is {1,0,0,1}.

Next, OOK modulation is performed on each sequence segment of length *M* to obtain *M* OOK symbols.

OOK modulation includes at least one of: upsampling/spreading/sequence mapping, time-frequency transform, determining a subcarrier coefficient, or inverse time-frequency transform.

Upsampling/spreading/sequence mapping is a process of converting each bit (also referred to as a logical bit) or element in a sequence into a sequence of length *K*, where *K* is a positive integer greater than 1. Taking spreading processing as an example, spreading processing refers to a process of repeating each bit or element in a sequence for *K* times. For example, a sequence is {1,0,0,1}, and spreading factor *K*=4, then a second sequence is {1,1,1,1,0,0,0,0,0,0,0,0,1,1,1,1}.

Time-frequency transform, also referred to as discrete Fourier transform (DFT), refers to a process of converting a sequence in the time-domain into frequency-domain data of several sampling points.

Determining a subcarrier coefficient refers to a process of determining coefficients of multiple subcarriers during transmission according to frequency-domain data of several sampling points, i.e., a process of modulating frequency-domain data subject to time-frequency transform onto multiple subcarriers.

Inverse time-frequency transform, also referred to as inverse discrete Fourier transform (IDFT), refers to a process of converting frequency-domain data of several sampling points into time-domain data of several sampling points.

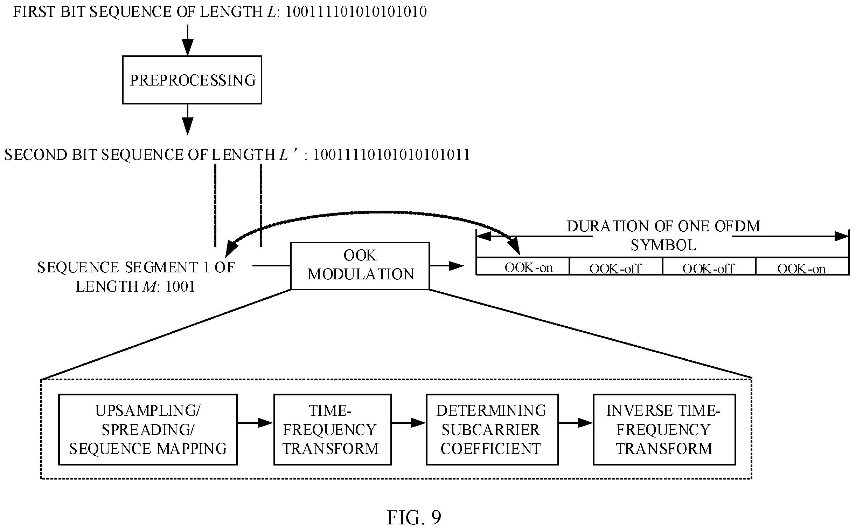

In some embodiments, length *L* of the first bit sequence is not an integer multiple of *M.* FIG. 9 is a schematic diagram illustrating generation of an MC-OOK symbol provided by an embodiment of the disclosure. When a first bit sequence is {1,0,0,1,1,1,1,0,1,0,1,0,1,0,1,0,1,0}, i.e., *L*=18, in the case of *M=*4, *L* is not an integer multiple of *M.* In this case, dividing the first bit sequence results in a last sequence segment of {1,0}. In this case, performing OOK modulation on the last sequence segment cannot generate 4 OOK symbols.

To address the above problem, a method for preprocessing a bit sequence is provided in this embodiment of the disclosure. In a case where *L* is not an integer multiple of *M,* by preprocessing the first bit sequence of length *L* to obtain a second bit sequence of length *L',* OOK modulation can be performed on all sequence segments or each sequence segment obtained by dividing the second bit sequence to obtain *M* OOK symbols. As illustrated in FIG. 9, the first bit sequence is pre-processed to obtain a second bit sequence of length *L*' as {1,0,0,1,1,1,1,0,1,0,1,0,1,0,1,0,1,0,1,1}, i.e., *L*'=20. In the case of *M=*4*, L'* is an integer multiple of *M*, and the last sequence segment obtained is {1,0,1,1}. In this case, performing OOK modulation on the last sequence segment can generate 4 OOK symbols.

In some embodiments, the time-domain sequence of the first RRM measurement signal (or a time-domain sequence of the second RRM measurement signal) is a sequence obtained by performing spreading processing on at least one of the above bit sequences (the first bit sequence/the second bit sequence), or a randomized phase sequence, or a sequence obtained by mapping a bit to a sequence.

In summary, the first RRM measurement signal or the second RRM measurement signal is obtained through modulation according to the following operations.

Step (1): the first bit sequence with a length of first quantity *L* is obtained.

*L* represents the number of bits in the first bit sequence. For example, the first bit sequence is {1,0,1,1,1,1,1,0,1,0,1,0,1,0,1,0,1,0}, then *L* is 18.

In some embodiments, the first bit sequence is any one of: an original bit sequence without encoding; an original bit sequence before encoding; an encoded bit sequence obtained after encoding an original bit sequence; or an encoded bit sequence obtained after performing at least one stage of multi-stage encoding on an original bit sequence.

Optionally, the first bit sequence is an original bit sequence without encoding.

Optionally, the first bit sequence is an original bit sequence before encoding.

In some embodiments, the original bit sequence may include a cyclic redundancy check (CRC) bit sequence.

Optionally, the first bit sequence is an encoded bit sequence obtained after encoding an original bit sequence.

Optionally, the first bit sequence is an encoded bit sequence obtained after performing at least one stage of multi-stage encoding on an original bit sequence.

In some embodiments, the encoded bit sequence may include a CRC bit sequence.

Step (2): In a case where first quantity *L* is not an integer multiple of second quantity *M*, the first bit sequence is processed into a second bit sequence with a length of third quantity *L'.*

Optionally, first quantity *L* is less than third quantity *L'.* Optionally, first quantity *L* is greater than third quantity *L*'.

Second quantity *M* represents the number of OOK symbols transmitted within a preset duration, where *M* is a positive integer. The preset duration is determined by the basic time-domain unit in the cellular communication system or the WiFi system.

In some embodiments, the preset duration is *t* OFDM symbols, and *M* OOK symbols can be transmitted in the *t* OFDM symbols. *M* represents the number of OOK symbols transmitted in the *t* OFDM symbols, and *t* is a positive integer. In embodiments of the disclosure, transmitting *M* OOK symbols in 1 OFDM symbol is taken as an example for illustration.

In some embodiments, *M* may be agreed upon by the protocol, or may be configured by the network device, or may be determined by the terminal device based on the preset mapping relationship.

In some embodiments, *M* has multiple candidate values, for example, *M*={1,2,4,6,8}.

Third quantity *L*' represents the number of bits in the second bit sequence. For example, the second bit sequence is {1,0,1,0}, then *L*' is 4.

In some embodiments, the second bit sequence is divided into at least one sequence segment with a length of second quantity *M* for OOK modulation, to obtain *M* OOK symbols corresponding to each sequence segment. That is, third quantity *L'* is an integer multiple of second quantity *M.* For example, the second bit sequence is {1,0,1,0}, and *M=*2*,* then the second bit sequence is divided into 2 sequence segments, each of which is with a length of 2, for example, sequence segments of {1,0} and {1,0}.

It can be understood that, in the case where first quantity *L* is not an integer multiple of second quantity *M*, when performing segmentation division on the first bit sequence with a length of first quantity *L,* the first bit sequence with a length of first quantity *L* cannot be divided into multiple sequence segments with a length of second quantity *M*. That is, a length of the last sequence segment may be less than second quantity *M*. In this case, OOK modulation cannot be performed on the last sequence segment. For example, suppose the first bit sequence is {1,0,0,1,1,1,1,0,1,0,1}, then *L=*11; in the case of M=4, performing segmentation division on the first bit sequence results in sequence segment 1 of {1,0,0,1}, sequence segment 2 of {1,1,1,0}, and sequence segment 3 of {1,0,1}.

A method for processing the first bit sequence when first quantity *L* is not an integer multiple of second quantity *M* is provided in an embodiment of the disclosure, so that it can ensured that the bit sequence obtained after processing can satisfy a requirement of OOK modulation.

In some embodiments, for the above method for processing the first bit sequence, there may be multiple optional designs.

Optional design 1: Bit padding is performed on the first bit sequence.

The first bit sequence is padded into the second bit sequence whose length is an integer multiple of second quantity *M*. Optionally, at least one padding bit is added to a head of the first bit sequence to obtain the second bit sequence whose length is an integer multiple of second quantity *M*. Optionally, at least one padding bit is added to a tail of the first bit sequence to obtain the second bit sequence whose length is an integer multiple of second quantity *M*. In embodiments of the disclosure, an example is given where at least one padding bit is added to the tail of the first bit sequence.

Optional design 2: Bit selection is performed on the first bit sequence.

The second bit sequence whose length is an integer multiple of second quantity *M* is selected based on the first bit sequence. Optionally, the second bit sequence whose length is an integer multiple of second quantity *M* is obtained by cyclically selecting a portion of the first bit sequence. Optionally, the second bit sequence whose length is an integer multiple of second quantity *M* is obtained by truncating a portion of the first bit sequence.

Step (3): the second bit sequence is divided to obtain at least one sequence segment with a length of second quantity *M*.

In some embodiments, since the length corresponding to the second bit sequence is equal to third quantity *L',* in a case where third quantity *L'* is an integer multiple of second quantity *M*, each sequence segment obtained by dividing the second bit sequence with a length of third quantity *L'* is with a length of second quantity *M.* For example, suppose the second bit sequence with a length of third quantity *L*' is {1,0,0,1,1,1,1,0,1,0,1,0,1,0,1,0,1,0,1····}, and M=4, then the second bit sequence with a length of third quantity *L'* is divided into multiple sequence segments, each of which is with a length of 4, for example, sequence segment 1 of {1,0,0,1}.

Step (4): OOK modulation is performed on each sequence segment to obtain *M* OOK symbols corresponding to each sequence segment.

OOK modulation is a process of modulating a digital sequence into a wireless signal in an MC-OOK waveform. OOK modulation is performed on each sequence segment with a length of second quantity *M* to obtain *M* OOK symbols corresponding to each sequence segment. The first RRM measurement signal or the second RRM measurement signal includes *M* OOK symbols.

In summary, in the method provided in the embodiment, the first bit sequence is processed into the second bit sequence with a length of third quantity *L'* when first quantity *L* corresponding to the first bit sequence is not an integer multiple of second quantity *M*, so that the second bit sequence obtained after processing can be divided into at least one sequence segment each with a length of second quantity *M*. In this way, it can be ensured that OOK symbols can be transmitted successfully even when the number of valid OOK symbols to-be-transmitted is not an integer multiple of *M*.

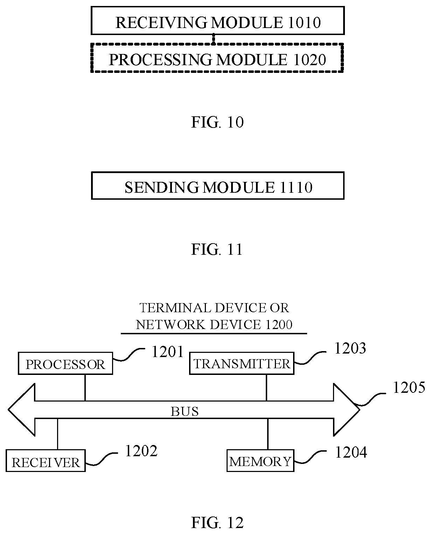

FIG. 10 is a block diagram of an apparatus for configuration information transmission provided by an exemplary embodiment of the disclosure. The apparatus may be implemented as a terminal device, or as a part of a terminal device, through software or hardware or a combination thereof. The apparatus includes a first receiver and a second receiver. Operating power consumption of the first receiver is lower than operating power consumption of the second receiver. The apparatus includes at least one of a receiving module 1010 or a processing module 1020.

The receiving module 1010 is configured to receive a measurement configuration. The measurement configuration includes a configuration for the first receiver to perform RRM measurement.

In a possible design of this embodiment, the first receiver is an LP-WUR or a WUR, and the second receiver is a main radio.

### RRM measurement configuration in RRC_CONNECTED

In a possible design of this embodiment, the receiving module 1010 is configured to receive a first measurement configuration. The first measurement configuration is an RRM measurement configuration when the apparatus for configuration information transmission is in RRC_CONNECTED.

In a possible design of this embodiment, the first measurement configuration includes at least one of: a frequency-domain position of a first RRM measurement signal; a frequency-domain bandwidth of the first RRM measurement signal; sequence information of the first RRM measurement signal; a time-domain position of the first RRM measurement signal; a symbol length of the first RRM measurement signal; a bit rate of the first RRM measurement signal; a measurement threshold of the first RRM measurement signal; a measurement offset of the first RRM measurement signal; or a cell list corresponding to the first RRM measurement signal. The first RRM measurement signal is an RRM measurement signal detectable by the first receiver in RRC_CONNECTED.

In a possible design of this embodiment, the first RRM measurement signal includes an LP-SS.

In a possible design of this embodiment, the first RRM measurement signal includes at least one of an OOK signal, an MC-OOK signal, or an FSK signal.

In a possible design of this embodiment, the first receiver of the apparatus for configuration information transmission in RRC_CONNECTED needs to measure a first RRM measurement signal of a neighbor cell, for example, the LP-WUR needs to measure an LP-SS of a neighbor cell.

In a possible design of this embodiment, the frequency-domain position of the first RRM measurement signal includes an ARFCN corresponding to the frequency-domain position of the first RRM measurement signal.

The ARFCN is a number used to identify a radio channel in a network, mainly used to indicate a channel frequency used by the apparatus for configuration information transmission in the network. Exemplarily, the ARFCN refers to a center frequency of a frequency-domain bandwidth occupied by the first RRM measurement signal.

In a possible design of this embodiment, the frequency-domain bandwidth of the first RRM measurement signal is in a unit of MHz or KHz, or is in an RB.

In a possible design of this embodiment, the sequence information of the first RRM measurement signal includes a time-domain sequence of the first RRM measurement signal.

In a possible design of this embodiment, the first RRM measurement signal includes at least one of the OOK signal or the MC-OOK signal, and the time-domain sequence is a sequence used in OOK modulation.

In an example where the first RRM measurement signal is an LP-SS and the first receiver is the LP-WUR, an On signal of an OOK waveform of the LP-SS can be generate through multi-carrier modulation. A sequence can be carried on multiple carriers, and a time-domain waveform corresponding to the sequence is demodulated as an On signal by the LP-WUR. The sequence includes at least one of a frequency-domain sequence or a time-domain sequence. Some high-capability LP-WURs can detect signals generated through multi-carrier modulation, such as OFDM signals.

In a possible design of this embodiment, the time-domain sequence of the first RRM measurement signal is associated with a cell ID.

Exemplarily, the time-domain sequence is associated with a PCI of a cell in the cell list.

In a possible design of this embodiment, the sequence information of the first RRM measurement signal indicates a relevant parameter for generating the first RRM measurement signal. Exemplarily, in an example where the first RRM measurement signal is an LP-SS, the relevant parameter includes at least one of: a periodicity of the LP-SS, a duty cycle ratio of the LP-SS, an amplitude of the LP-SS, or a frequency of the LP-SS.

In a possible design of this embodiment, the time-domain position of the first RRM measurement signal includes at least one of: a periodicity of a measurement time window; an offset of the measurement time window; or a duration of the measurement time window. By configuring the above, RRM measurement can be ensured to be performed at a specified time, and the duration of RRM measurement can be flexibly adjusted.

In a possible design of this embodiment, the symbol length of the first RRM measurement signal is an integer multiple of an OFDM symbol length.

The symbol length of the first RRM measurement signal or the bit rate of the first RRM measurement signal is configured by the network device, which is more flexible compared with determining an OFDM symbol length through a subcarrier spacing. The symbol length of the first RRM measurement signal may be *N* times an OFDM symbol length, where *N* is a positive integer.

In a possible design of this embodiment, the measurement threshold of the first RRM measurement signal includes at least one of: an RSRP threshold of the first RRM measurement signal; an RSRQ threshold of the first RRM measurement signal; an SINR threshold of the first RRM measurement signal; an RSSI threshold of the first RRM measurement signal; or an energy detection threshold of the first RRM measurement signal.

In a possible design of this embodiment, the measurement offset of the first RRM measurement signal includes at least one of: measurement offset information of the first RRM measurement signal; or cell-specific measurement offset information corresponding to the first RRM measurement signal.

In the related art, a measurement offset (offsetMO) information element includes the following measurement offset parameters: rsrpOffsetSSB; rsrqOffsetSSB; and sinrOffsetSSB.

In an example where the first RRM measurement signal is an LP-SS, the measurement offset of the LP-SS includes at least one of the following measurement offset parameters: rsrpOffsetLPSS; rsrqOffsetLPSS; or sinrOffsetLPSS.

By configuring the measurement offset information of the first RRM measurement signal, the measurement process can be adjusted in the time domain to avoid conflicts with other services, thereby obtaining more accurate measurement data. By configuring the cell-specific measurement offset information corresponding to the first RRM measurement signal, a measurement offset can be configured individually for each cell to meet differences and requirements between different cells.

In a possible design of this embodiment, the cell list corresponding to the first RRM measurement signal indicates a cell(s) that supports performing RRM measurement based on the first RRM measurement signal.

In a possible design of this embodiment, the information corresponding to the cell list includes the PCI.

Different cells may differ in whether they support the first RRM measurement signal. Some cells support the first RRM measurement signal, while some cells do not support the first RRM measurement signal. The cell list corresponding to the first RRM measurement signal enables the apparatus for configuration information transmission to perform RRM measurement using a corresponding receiver based on whether different cells support the first RRM measurement signal.

The RRM measurement signal includes an SSB, a CSI-RS, and the first RRM measurement signal. In an example where the first RRM measurement signal is an LP-SS, for some cells, only RRM measurement based on SSBs or CSI-RSs is supported; or, only RRM measurement based on LP-SSs is supported; or, both RRM measurement based on SSBs or CSI-RSs and RRM measurement based on LP-SSs are supported. The cell list corresponding to the first RRM measurement signal indicates a cell(s) that only supports RRM measurement based on LP-SSs, as well as a cell(s) that supports both RRM measurement based on SSBs or CSI-RSs and RRM measurement based on LP-SSs.

### RRM measurement configuration in RRC_IDLE or RRC_INACTIVE

In a possible design of this embodiment, the receiving module 1010 is configured to receive a second measurement configuration. The second measurement configuration is an RRM measurement configuration when the apparatus for configuration information transmission is in RRC_IDLE or RRC_INACTIVE.

The first receiver of the apparatus for configuration information transmission in RRC_IDLE or RRC_INACTIVE needs to measure a second RRM measurement signal of a neighbor cell(s), and perform cell reselection according to a measurement result, so as to select a cell with a better measurement result to camp on.

In a possible design of this embodiment, the second measurement configuration includes at least one of: a carrier list; a measurement duration; or a validity area list.

The carrier list indicates a carrier(s) for measurement. The measurement duration indicates a duration of measurement, for example, sec10 indicates a measurement duration of 10 seconds, and sec30 indicates a measurement duration of 30 seconds. The validity area list indicates a carrier frequency and a validity cell list.

In a possible design of this embodiment, the carrier list includes at least one of: a carrier frequency; a subcarrier spacing corresponding to a carrier; a frequency band list; a measurement result; a quality threshold; a measurement signal configuration; a measurement cell list; or a measurement signal quantity.

In a possible design of this embodiment, an ARFCN corresponding to a carrier indicates a carrier frequency.

In a possible design of this embodiment, the frequency band list indicates a frequency to which the second measurement configuration applies.

In a possible design of this embodiment, the measurement result includes at least one of an RSRP or an RSRQ.

In a possible design of this embodiment, the quality threshold (qualityThreshold) indicates a measurement cell quality threshold, and includes at least one of: an RSRP threshold of a second RRM measurement signal; or an RSRQ threshold of the second RRM measurement signal. The second RRM measurement signal is an RRM measurement signal detectable by the first receiver in RRC_IDLE or RRC_INACTIVE.

In a possible design of this embodiment, the measurement signal configuration includes at least one of: a time-domain position of the second RRM measurement signal; a frequency-domain position of the second RRM measurement signal; a frequency-domain bandwidth of the second RRM measurement signal; a beam configuration of the second RRM measurement signal; a symbol length of the second RRM measurement signal; or a measurement-beam measurement configuration of the second RRM measurement signal. The second RRM measurement signal is a measurement signal detectable by the first receiver. The measurement-beam measurement configuration of the second RRM measurement signal includes a beam measurement configuration.

In a possible design of this embodiment, the measurement cell list indicates a cell(s) for which measurement and reporting is to be performed.

The measurement cell list indicates a cell(s) for which measurement and reporting is to be performed in RRC_IDLE or RRC_INACTIVE, including a range of PCIs.

In a possible design of this embodiment, the measurement cell list indicates a cell(s) that supports performing RRM measurement based on the second RRM measurement signal. The second RRM measurement signal is a measurement signal detectable by the first receiver.

Different cells may differ in whether they support the second RRM measurement signal in different manners. Some cells support the second RRM measurement signal, while some cells do not support the second RRM measurement signal. The cell list corresponding to the second RRM measurement signal enables the apparatus for configuration information transmission to perform RRM measurement using a corresponding receiver based on whether different cells support the second RRM measurement signal.

The RRM measurement signal includes an SSB, a CSI-RS, and the second RRM measurement signal. In an example where the second RRM measurement signal is an LP-SS, for some cells, only RRM measurement based on SSBs or CSI-RSs is supported; alternatively, only RRM measurement based on LP-SSs is supported; alternatively, both RRM measurement based on SSBs or CSI-RSs and RRM measurement based on LP-SSs are supported. The cell list corresponding to the second RRM measurement signal indicates a cell(s) that only supports RRM measurement based on LP-SS, as well as a cell(s) that supports both RRM measurement based on SSBs or CSI-RSs and RRM measurement based on LP-SSs.

In a possible design of this embodiment, the measurement signal quantity represents an average of measurement signals received within a specified time period.

By averaging measurement signals received within certain time units, the measurement signal quantity is obtained, and an average of measurement results corresponding to these measurement signals represents a cell measurement result.

In a possible design of this embodiment, the validity area list includes at least one of: the carrier frequency; or the validity cell list.

In a possible design of this embodiment, a carrier frequency includes an ARFCN corresponding to a carrier. An ARFCN corresponding to a carrier indicates a carrier frequency.

In a possible design of this embodiment, the validity cell list includes a range of PCIs.

For each carrier frequency, the apparatus for configuration information transmission performs RRM measurement on a cell in the validity cell list.

In a possible design of this embodiment, the processing module 1020 is configured to perform RRM measurement through the first receiver based on the measurement configuration.

In this embodiment, the receiving module 1010 may be split into at least one receiving sub-module, each of which being configured to perform at least one of the above receiving steps, for example, a first receiving sub-module and a second receiving sub-module. The first receiving sub-module is configured for receiving the first measurement configuration, and the second receiving sub-module is configured for receiving the second measurement configuration; or the first receiving sub-module is configured for receiving the second measurement configuration, and the second receiving sub-module is configured for receiving the first measurement configuration. The functions of different receiving sub-modules are not limited in this embodiment.

This embodiment takes one receiving module 1010 as an example for illustration, and does not limit the number of receiving modules 1010.

For the function introduction of the receiving module 1010, reference can be made to the content of step 610 in the embodiment illustrated in FIG. 6.

For the function introduction of the processing module 1020, reference can be made to the content of step 610 in the embodiment illustrated in FIG. 6.

FIG. 11 is a block diagram of an apparatus for configuration information transmission provided by an exemplary embodiment of the disclosure. The apparatus may be implemented as a network device, or as a part of a network device, through software or hardware or a combination of both. The apparatus includes a sending module 1110.

The sending module 1110 is configured to send a measurement configuration.

The measurement configuration includes a configuration for a first receiver to perform RRM measurement. An apparatus for measurement configuration reception includes the first receiver and a second receiver. Operating power consumption of the first receiver is lower than operating power consumption of the second receiver.

RRM measurement configuration in RRC_CONNECTED

In a possible design of this embodiment, the sending module 1110 is configured to send a first measurement configuration. The first measurement configuration is an RRM measurement configuration configured for the terminal device in RRC_CONNECTED.

In a possible design of this embodiment, the first measurement configuration includes at least one of: a frequency-domain position of a first RRM measurement signal; a frequency-domain bandwidth of the first RRM measurement signal; sequence information of the first RRM measurement signal; a time-domain position of the first RRM measurement signal; a symbol length of the first RRM measurement signal; a bit rate of the first RRM measurement signal; a measurement threshold of the first RRM measurement signal; a measurement offset of the first RRM measurement signal; or a cell list corresponding to the first RRM measurement signal. The first RRM measurement signal is an RRM measurement signal detectable by the first receiver in RRC_CONNECTED.

In a possible design of this embodiment, the first RRM measurement signal includes an LP-SS.

In a possible design of this embodiment, the first RRM measurement signal includes: at least one of an OOK signal, an MC-OOK signal, or an FSK signal.

In a possible design of this embodiment, the first receiver of a terminal device in RRC_CONNECTED needs to measure a first RRM measurement signal of a neighbor cell, for example, an LP-WUR needs to measure an LP-SS of a neighbor cell.

In a possible design of this embodiment, the frequency-domain position of the first RRM measurement signal includes an ARFCN corresponding to the frequency-domain position of the first RRM measurement signal.

The ARFCN is a number used to identify a radio channel in a network, mainly used to indicate a channel frequency used by the terminal device in the network. Exemplarily, the ARFCN refers to a center frequency of a frequency-domain bandwidth occupied by the first RRM measurement signal.

In a possible design of this embodiment, the frequency-domain bandwidth of the first RRM measurement signal is in a unit of MHz or KHz, or is in a unit of an RB.

In a possible design of this embodiment, the sequence information of the first RRM measurement signal includes a time-domain sequence of the first RRM measurement signal.

In a possible design of this embodiment, the first RRM measurement signal includes at least one of an OOK signal or an MC-OOK signal, and the time-domain sequence is a sequence used in OOK modulation.

In an example where the first RRM measurement signal is an LP-SS and the first receiver is the LP-WUR, an On signal of an OOK waveform of the LP-SS can be generated through multi-carrier modulation. One sequence can be carried on multiple carriers, and a time-domain waveform corresponding to the sequence is demodulated as an On signal by the LP-WUR. The sequence includes at least one of a frequency-domain sequence or a time-domain sequence. Some high-capability LP-WURs can detect signals generated through multi-carrier modulation, such as an OFDM signal.

In a possible design of this embodiment, the time-domain sequence of the first RRM measurement signal is associated with a cell ID.

Exemplarily, the time-domain sequence is associated with a PCI of a cell in the cell list.

The time-domain sequence of the first RRM measurement signal is associated with the cell ID, so that each cell has a unique time-domain sequence, and accordingly different cells can be accurately identified and distinguished.

In a possible design of this embodiment, the sequence information of the first RRM measurement signal indicates a relevant parameter for generating the first RRM measurement signal. Exemplarily, in an example where the first RRM measurement signal is an LP-SS, the relevant parameter includes at least one of: a periodicity of the LP-SS, a duty cycle ratio of the LP-SS, an amplitude of the LP-SS, or a frequency of the LP-SS.

In a possible design of this embodiment, the time-domain position of the first RRM measurement signal includes at least one of: a periodicity of a measurement time window; an offset of the measurement time window; or a duration of the measurement time window. By configuring the above, RRM measurement can be ensured to be performed at a specified time, and the duration of RRM measurement can be flexibly adjusted.

In a possible design of this embodiment, the symbol length of the first RRM measurement signal is an integer multiple of an OFDM symbol length.

The symbol length of the first RRM measurement signal or the bit rate of the first RRM measurement signal is configured by the apparatus for configuration information transmission, which is more flexible compared with determining an OFDM symbol length through a subcarrier spacing. The symbol length of the first RRM measurement signal may be *N* times an OFDM symbol length, where *N* is a positive integer.

In a possible design of this embodiment, the measurement threshold of the first RRM measurement signal includes at least one of: an RSRP threshold of the first RRM measurement signal; an RSRQ threshold of the first RRM measurement signal; an SINR threshold of the first RRM measurement signal; an RSSI threshold of the first RRM measurement signal; or an energy detection threshold of the first RRM measurement signal.

In a possible design of this embodiment, the measurement offset of the first RRM measurement signal includes at least one of: measurement offset information of the first RRM measurement signal; or cell-specific measurement offset information corresponding to the first RRM measurement signal.

In the related art, a measurement offset (offsetMO) information element includes the following measurement offset parameters: rsrpOffsetSSB; rsrqOffsetSSB; or sinrOffsetSSB.

In an example where the first RRM measurement signal is an LP-SS, the measurement offset of the LP-SS includes at least one of the following measurement offset parameters: rsrpOffsetLPSS; rsrqOffsetLPSS; or sinrOffsetLPSS.

In a possible design of this embodiment, the cell list corresponding to the first RRM measurement signal indicates a cell(s) that supports performing RRM measurement based on the first RRM measurement signal.

In a possible design of this embodiment, the information corresponding to the cell list includes the PCI.

Different cells may differ in whether they support the first RRM measurement signal in different manners. Some cells support the first RRM measurement signal, while some cells do not support the first RRM measurement signal. The cell list corresponding to the first RRM measurement signal enables the terminal device to perform RRM measurement using a corresponding receiver based on whether different cells support the first RRM measurement signal.

The RRM measurement signal includes an SSB, a CSI-RS, and the first RRM measurement signal. In an example where the first RRM measurement signal is an LP-SS, for some cells, only RRM measurement based on SSBs or CSI-RSs is supported; or, only RRM measurement based on LP-SSs is supported; or, both RRM measurement based on SSBs or CSI-RSs and RRM measurement based on LP-SSs are supported. The cell list corresponding to the first RRM measurement signal indicates a cell(s) that only supports RRM measurement based on LP-SS, as well as a cell(s) that supports both RRM measurement based on SSBs or CSI-RSs and RRM measurement based on LP-SSs.

### RRM measurement configuration in RRC_IDLE or RRC_INACTIVE

In a possible design of this embodiment, the sending module 1110 is configured to send a second measurement configuration. The second measurement configuration is an RRM measurement configuration configured for the terminal device in RRC_IDLE or RRC_INACTIVE.

The first receiver of the terminal device in RRC_IDLE or RRC_INACTIVE needs to measure a second RRM measurement signal of a neighbor cell, and perform cell reselection according to the measurement result, so as to select a cell with a better measurement result to camp on.

By receiving the second measurement configuration, a measurement task to be performed by the terminal device in RRC_IDLE or RRC_INACTIVE, such as receiving neighbor cell information, measuring cell quality, etc., can be specified. This allows distinguishing the measurement task to be performed by the terminal device in RRC_IDLE or RRC_INACTIVE from a measurement task to be performed by the terminal device in RRC_CONNECTED, thereby improving measurement flexibility.

In a possible design of this embodiment, the second measurement configuration includes at least one of: a carrier list; a measurement duration; or a validity area list.

The carrier list indicates a carrier(s) for measurement. The measurement duration indicates a duration of measurement, for example, sec10 indicates a measurement duration of 10 seconds, and sec30 indicates a measurement duration of 30 seconds. The validity area list indicates a carrier frequency and a validity cell list.

In a possible design of this embodiment, the carrier list includes at least one of: a carrier frequency; a subcarrier spacing corresponding to a carrier; a frequency band list; a measurement result; a quality threshold; a measurement signal configuration; a measurement cell list; or a measurement signal quantity.

In a possible design of this embodiment, an ARFCN corresponding to a carrier indicates a carrier frequency.

In a possible design of this embodiment, the frequency band list indicates a frequency to which the second measurement configuration applies.

In a possible design of this embodiment, the measurement result includes at least one of an RSRP or an RSRQ.

In a possible design of this embodiment, the quality threshold (qualityThreshold) indicates a measurement cell quality threshold, and includes at least one of: an RSRP threshold of a second RRM measurement signal; or an RSRQ threshold of the second RRM measurement signal. The second RRM measurement signal is an RRM measurement signal detectable by the first receiver in RRC_IDLE or RRC_INACTIVE.

In a possible design of this embodiment, the measurement signal configuration includes at least one of: a time-domain position of the second RRM measurement signal; a frequency-domain position of the second RRM measurement signal; a frequency-domain bandwidth of the second RRM measurement signal; a beam configuration of the second RRM measurement signal; a symbol length of the second RRM measurement signal; or a measurement-beam measurement configuration of the second RRM measurement signal. The second RRM measurement signal is a measurement signal detectable by the first receiver. The measurement-beam measurement configuration of the second RRM measurement signal includes a beam measurement configuration.

In a possible design of this embodiment, the measurement cell list indicates a cell(s) for which measurement and reporting is to be performed.

The measurement cell list indicates a cell(s) for which measurement and reporting is to be performed in RRC_IDLE or RRC_INACTIVE, including a range of PCIs.

In a possible design of this embodiment, the measurement cell list indicates a cell(s) that supports performing RRM measurement based on the second RRM measurement signal. The second RRM measurement signal is a measurement signal detectable by the first receiver.

Different cells may differ in whether they support the second RRM measurement signal. Some cells support the second RRM measurement signal, while some cells do not support the second RRM measurement signal. The cell list corresponding to the second RRM measurement signal enables the terminal device to perform RRM measurement using a corresponding receiver based on whether different cells support the second RRM measurement signal.

The RRM measurement signals include an SSB, a CSI-RS, and the second RRM measurement signal. In an example where the second RRM measurement signal is an LP-SS, for some cells, only RRM measurement based on SSBs or CSI-RSs is supported; or, only RRM measurement based on LP-SS is supported; or, both RRM measurement based on SSBs or CSI-RSs and RRM measurement based on LP-SSs are supported. The cell list corresponding to the second RRM measurement signal indicates a cell(s) that only support RRM measurement based on LP-SSs, as well as a cell(s) that supports both RRM measurement based on SSBs or CSI-RSs and RRM measurement based on LP-SSs.

In a possible design of this embodiment, the measurement signal quantity represents an average of measurement signals received within a specified time period.

By averaging measurement signals received within certain time units, the measurement signal quantity is obtained, and an average of measurement results corresponding to these measurement signals represents a cell measurement result.

In a possible design of this embodiment, the validity area list includes at least one of: the carrier frequency; or the validity cell list.

In a possible design of this embodiment, a carrier frequency includes an ARFCN corresponding to a carrier. An ARFCN corresponding to a carrier indicates a carrier frequency.

In a possible design of this embodiment, the validity cell list includes a range of PCIs.

For each carrier frequency, the terminal device performs RRM measurement on a cell in the validity cell list.

In this embodiment, the sending module 1110 may be split into at least one sending sub-module, each of which being configured to perform at least one of the above sending steps, for example, a first sending sub-module and a second sending sub-module. The first sending sub-module is configured for sending the first measurement configuration, and the second sending sub-module is configured for sending the second measurement configuration; or the first sending sub-module is configured for sending the second measurement configuration, and the second sending sub-module is configured for sending the first measurement configuration. The functions of different sending sub-modules are not limited in this embodiment.

This embodiment takes one sending module 1110 as an example for illustration, and does not limit the number of sending modules 1110.

For the function introduction of the sending module 1110, reference can be made to the content of step 710 in the embodiment of FIG. 7.

FIG. 12 is a schematic structural diagram of a terminal device or a network device 1200 provided by an exemplary embodiment of the disclosure. The terminal device includes a processor 1201, a receiver 1202, a transmitter 1203, a memory 1204, and a bus 1205.

The processor 1201 includes one or more processing cores. The processor 1201 executes various functional applications and information processing by running software programs and modules. In some embodiments, the processor 1201 may be configured to implement the functions and steps of the processing module 1020 described above.

The receiver 1202 and the transmitter 1203 may be implemented as a transceiver component, which may be a communication chip. The transceiver component may be referred to as a transceiver. In some embodiments, the receiver 1202 may be configured to implement the functions and steps of the receiving module 1010 described above. In some embodiments, the transmitter 1203 may be configured to implement the functions and steps of the sending module 1110 described above.

The memory 1204 is connected to the processor 1201 via the bus 1205.

The memory 1204 may be configured to store at least one instruction. The processor 1201 is configured to execute the at least one instruction to implement the steps in the above method embodiments.

In addition, the memory 1204 may be implemented by any type of a volatile storage device or a non-volatile storage device or a combination thereof. The volatile storage device or non-volatile storage device includes but is not limited to: a magnetic disk or an optical disk, an electrically-erasable programmable read only memory (EEPROM), an erasable programmable read only memory (EPROM), a static random access memory (SRAM), a read-only memory (ROM), a magnetic memory, a flash memory, and a programmable ROM (PROM).

In some embodiments, the receiver 1202 independently performs signal/data reception, or the processor 1201 controls the receiver 1202 to perform signal/data reception, or the processor 1201 requests the receiver 1202 to perform signal/data reception, or the processor 1201 cooperates with the receiver 1202 to perform signal/data reception.

In some embodiments, the transmitter 1203 independently performs signal/data transmission, or the processor 1201 controls the transmitter 1203 to perform signal/data transmission, or the processor 1201 requests the transmitter 1203 to perform signal/data transmission, or the processor 1201 cooperates with the transmitter 1203 to perform signal/data transmission.

In an exemplary embodiment, a computer-readable storage medium is also provided. At least one section of programs is stored in the computer-readable storage medium. The at least one section of programs is loaded and executed by a processor to implement the methods for measurement configuration transmission or the methods for configuration information transmission provided in the above method embodiments.

In an exemplary embodiment, a computer program product or a computer program is also provided. The computer program product or the computer program includes computer instructions. The computer instructions are stored in a computer-readable storage medium. The computer instructions are obtained by a processor from the computer-readable storage medium. The processor executes the computer instructions to implement the methods for measurement configuration transmission or the methods for configuration information transmission provided in the above method embodiments.

It can be understood by those of ordinary skill in the art that, all or some of the steps for implementing the above embodiments may be accomplished by means of hardware, or by a program instructing relevant hardware. The program may be stored in a computer-readable storage medium. The above-mentioned storage medium may be an ROM, a magnetic disk, an optical disk, or the like.

The above elaborations are merely optional embodiments of the disclosure and are not intended for limiting the disclosure. Any modifications, equivalent replacements, improvements, etc. made within the concept and principle of the disclosure shall fall within the protection scope of the disclosure.

## Claims

1. A method for measurement configuration transmission, the method being performed by a terminal device, the terminal device comprising a first receiver and a second receiver, operating power consumption of the first receiver being lower than operating power consumption of the second receiver, and the method comprising:
receiving a measurement configuration, wherein the measurement configuration comprises a configuration for the first receiver to perform radio resource management (RRM) measurement.

2. The method of claim 1, wherein receiving the measurement configuration comprises:
receiving a first measurement configuration;
wherein the first measurement configuration is an RRM measurement configuration configured for the terminal device in a radio resource control (RRC) connected mode.

3. The method of claim 2, wherein the first measurement configuration comprises at least one of:
a frequency-domain position of a first RRM measurement signal;
a frequency-domain bandwidth of the first RRM measurement signal;
sequence information of the first RRM measurement signal;
a time-domain position of the first RRM measurement signal;
a symbol length of the first RRM measurement signal;
a bit rate of the first RRM measurement signal;
a measurement threshold of the first RRM measurement signal;
a measurement offset of the first RRM measurement signal; or
a cell list corresponding to the first RRM measurement signal,
wherein the first RRM measurement signal is an RRM measurement signal detectable by the first receiver in the RRC connected mode.

4. The method of claim 3, wherein the frequency-domain position of the first RRM measurement signal comprises an absolute radio frequency channel number (ARFCN) corresponding to the frequency-domain position of the first RRM measurement signal.

5. The method of claim 3, wherein the frequency-domain bandwidth of the first RRM measurement signal is in a unit of megahertz (MHz) or kilohertz (KHz), or is in a unit of a resource block (RB).

6. The method of claim 3, wherein the sequence information of the first RRM measurement signal comprises a time-domain sequence of the first RRM measurement signal.

7. The method of claim 6, wherein the first RRM measurement signal comprises at least one of an on-off keying (OOK) signal or a multi-carrier OOK (MC-OOK) signal, and the time-domain sequence is a sequence used in OOK modulation.

8. The method of claim 6 or 7, wherein the time-domain sequence of the first RRM measurement signal is associated with a cell identity (ID).

9. The method of claim 3, wherein the time-domain position of the first RRM measurement signal comprises at least one of:
a periodicity of a measurement time window;
an offset of the measurement time window; or
a duration of the measurement time window.

10. The method of claim 3, wherein the symbol length of the first RRM measurement signal is an integer multiple of an orthogonal frequency division multiplexing (OFDM) symbol length.

11. The method of claim 3, wherein the measurement threshold of the first RRM measurement signal comprises at least one of:
a reference signal received power (RSRP) threshold of the first RRM measurement signal;
a reference signal received quality (RSRQ) threshold of the first RRM measurement signal;
a signal to interference plus noise ratio (SINR) threshold of the first RRM measurement signal;
a received signal strength indicator (RSSI) threshold of the first RRM measurement signal; or
an energy detection threshold of the first RRM measurement signal.

12. The method of claim 3, wherein the measurement offset of the first RRM measurement signal comprises at least one of:
measurement offset information of the first RRM measurement signal; or
cell-specific measurement offset information corresponding to the first RRM measurement signal.

13. The method of claim 3, wherein the cell list corresponding to the first RRM measurement signal indicates a cell that supports performing RRM measurement based on the first RRM measurement signal.

14. The method of claim 13, wherein the cell list corresponding to the first RRM measurement signal comprises a range of physical cell identities (PCIs).

15. The method of claim 1, wherein receiving the measurement configuration comprises:
receiving a second measurement configuration,
wherein the second measurement configuration is an RRM measurement configuration configured for the terminal device in an RRC idle mode or an RRC inactive mode.

16. The method of claim 15, wherein the second measurement configuration comprises at least one of:
a carrier list;
a measurement duration; or
a validity area list.

17. The method of claim 16, wherein the carrier list comprises at least one of:
a carrier frequency;
a subcarrier spacing corresponding to a carrier;
a frequency band list;
a measurement result;
a quality threshold;
a measurement signal configuration;
a measurement cell list; or
a measurement signal quantity.

18. The method of claim 17, wherein the quality threshold represents a measurement cell quality threshold, and comprises at least one of:
an RSRP threshold of a second RRM measurement signal; or
an RSRQ threshold of the second RRM measurement signal,
wherein the second RRM measurement signal is an RRM measurement signal detectable by the first receiver in an RRC idle mode or an RRC inactive mode.

19. The method of claim 17, wherein the measurement signal configuration comprises at least one of:
a time-domain position of a second RRM measurement signal;
a frequency-domain position of the second RRM measurement signal;
a frequency-domain bandwidth of the second RRM measurement signal;
a beam configuration for the second RRM measurement signal;
a symbol length of the second RRM measurement signal; or
a measurement-beam measurement configuration of the second RRM measurement signal,
wherein the second RRM measurement signal is a measurement signal detectable by the first receiver, and the measurement-beam measurement configuration of the second RRM measurement signal comprises a beam measurement configuration.

20. The method of claim 17, wherein the measurement cell list indicates a cell for which measurement and reporting is to be performed.

21. The method of claim 20, wherein the measurement cell list indicates a cell that supports performing RRM measurement based on a second RRM measurement signal, wherein the second RRM measurement signal is a measurement signal detectable by the first receiver.

22. The method of claim 17, wherein the measurement signal quantity represents an average of measurement signals received within a specified time period.

23. The method of claim 16, wherein the validity area list comprises at least one of:
a carrier frequency; or
a validity cell list.

24. The method of claim 23, wherein the carrier frequency comprises an ARFCN corresponding to a carrier.

25. The method of claim 23 or 24, wherein the validity cell list comprises a range of PCIs.

26. The method of any one of claims 1 to 25, further comprising:
performing RRM measurement through the first receiver based on the measurement configuration.

27. A method for measurement configuration transmission, the method being performed by a network device, and the method comprising:
sending a measurement configuration,
wherein the measurement configuration comprises a configuration for a first receiver to perform radio resource management (RRM) measurement, a terminal device comprises the first receiver and a second receiver, and operating power consumption of the first receiver is lower than operating power consumption of the second receiver.

28. The method of claim 27, wherein transmitting the measurement configuration comprises:
transmitting a first measurement configuration;
wherein the first measurement configuration is an RRM measurement configuration configured for the terminal device in a radio resource control (RRC) connected mode.

29. The method of claim 28, wherein the first measurement configuration comprises at least one of:
a frequency-domain position of a first RRM measurement signal;
a frequency-domain bandwidth of the first RRM measurement signal;
sequence information of the first RRM measurement signal;
a time-domain position of the first RRM measurement signal;
a symbol length of the first RRM measurement signal;
a bit rate of the first RRM measurement signal;
a measurement threshold of the first RRM measurement signal;
a measurement offset of the first RRM measurement signal; or
a cell list corresponding to the first RRM measurement signal,
wherein the first RRM measurement signal is an RRM measurement signal detectable by the first receiver in the RRC connected mode.

30. The method of claim 29, wherein the frequency-domain position of the first RRM measurement signal comprises an absolute radio frequency channel number (ARFCN) corresponding to the frequency-domain position of the first RRM measurement signal.

31. The method of claim 29, wherein the frequency-domain bandwidth of the first RRM measurement signal is in a unit of megahertz (MHz) or kilohertz (KHz), or is in a unit of a resource block (RB).

32. The method of claim 29, wherein the sequence information of the first RRM measurement signal comprises a time-domain sequence of the first RRM measurement signal.

33. The method of claim 32, wherein the first RRM measurement signal comprises at least one of an on-off keying (OOK) signal or a multi-carrier OOK (MC-OOK) signal, and the time-domain sequence is a sequence used in OOK modulation.

34. The method of claim 32 or 33, wherein the time-domain sequence of the first RRM measurement signal is associated with a cell identity (ID).

35. The method of claim 29, wherein the time-domain position of the first RRM measurement signal comprises at least one of:
a periodicity of a measurement time window;
an offset of the measurement time window; or
a duration of the measurement time window.

36. The method of claim 29, wherein the symbol length of the first RRM measurement signal is an integer multiple of an orthogonal frequency division multiplexing (OFDM) symbol length.

37. The method of claim 29, wherein the measurement threshold of the first RRM measurement signal comprises at least one of:
a reference signal received power (RSRP) threshold of the first RRM measurement signal;
a reference signal received quality (RSRQ) threshold of the first RRM measurement signal;
a signal to interference plus noise ratio (SINR) threshold of the first RRM measurement signal;
a received signal strength indicator (RSSI) threshold of the first RRM measurement signal; or
an energy detection threshold of the first RRM measurement signal.

38. The method of claim 29, wherein the measurement offset of the first RRM measurement signal comprises at least one of:
measurement offset information of the first RRM measurement signal; or
cell-specific measurement offset information corresponding to the first RRM measurement signal.

39. The method of claim 29, wherein the cell list corresponding to the first RRM measurement signal indicates a cell that supports performing RRM measurement based on the first RRM measurement signal.

40. The method of claim 39, wherein the cell list corresponding to the first RRM measurement signal comprises a range of physical cell identities (PCIs).

41. The method of claim 27, wherein sending the measurement configuration comprises:
transmitting a second measurement configuration,
wherein the second measurement configuration is an RRM measurement configuration configured for the terminal device in an RRC idle mode or an RRC inactive mode.

42. The method of claim 41, wherein the second measurement configuration comprises at least one of the following:
a carrier list;
a measurement duration; or
a validity area list.

43. The method of claim 42, wherein the carrier list comprises at least one of:
a carrier frequency;
a subcarrier spacing corresponding to a carrier;
a frequency band list;
a measurement result;
a quality threshold;
a configuration associated with a measurement signal;
a measurement cell list; or
a measurement signal quantity.

44. The method of claim 43, wherein the quality threshold represents a measurement cell quality threshold, and comprises at least one of:
an RSRP threshold of a second RRM measurement signal; or
an RSRQ threshold of the second RRM measurement signal,
wherein the second RRM measurement signal is an RRM measurement signal detectable by the first receiver in an RRC idle mode or an RRC inactive mode.

45. The method of claim 43, wherein the measurement signal configuration comprises at least one of:
a time-domain position of a second RRM measurement signal;
a frequency-domain position of the second RRM measurement signal;
a frequency-domain bandwidth of the second RRM measurement signal;
a beam configuration of the second RRM measurement signal;
a symbol length of the second RRM measurement signal; or
a measurement-beam measurement configuration of the second RRM measurement signal,
wherein the second RRM measurement signal is a measurement signal detectable by the first receiver, and the measurement-beam measurement configuration of the second RRM measurement signal comprises a beam measurement configuration.

46. The method of claim 43, wherein the measurement cell list indicates a cell for which measurement and reporting is to be performed.

47. The method of claim 46, wherein the measurement cell list indicates a cell that supports performing RRM measurement based on a second RRM measurement signal, wherein the second RRM measurement signal is a measurement signal detectable by the first receiver.

48. The method of claim 43, wherein the measurement signal quantity represents an average of measurement signals received within a specified time period.

49. The method of claim 48, wherein the validity area list comprises at least one of:
a carrier frequency; or
a validity cell list.

50. The method of claim 49, wherein the carrier frequency comprises an ARFCN corresponding to a carrier.

51. The method of claim 49 or 50, wherein the validity cell list comprises a range of PCIs.

52. An apparatus for measurement configuration transmission comprising a first receiver and a second receiver, operating power consumption of the first receiver being lower than operating power consumption of the second receiver, and the apparatus comprising:
a receiving module configured to receive a measurement configuration, wherein the measurement configuration comprises a configuration for the first receiver to perform radio resource management (RRM) measurement.

53. An apparatus for measurement configuration transmission, comprising:
a sending module configured to transmit a measurement configuration,
wherein the measurement configuration comprises a configuration for a first receiver to perform radio resource management (RRM) measurement, an apparatus for measurement configuration reception comprises the first receiver and a second receiver, and operating power consumption of the first receiver is lower than operating power consumption of the second receiver.

54. A terminal device, comprising:
a processor;
a transceiver connected to the processor; and
a memory configured to store executable instructions of the processor,
wherein the processor is configured to load and execute the executable instructions to implement the method for measurement configuration transmission of any one of claims 1 to 26.

55. A network device, comprising:
a processor;
a transceiver connected to the processor; and
a memory configured to store executable instructions of the processor,
wherein the processor is configured to load and execute the executable instructions to implement the method for measurement configuration transmission of any one of claims 27 to 51.

56. A computer-readable storage medium, configured to store at least one section of program, wherein the at least one section of program is loaded and executed by a processor to implement the method for measurement configuration transmission of any one of claims 1 to 26, or the method for measurement configuration transmission of any one of claims 27 to 51.

57. A computer program product, comprising computer instructions, wherein the computer instructions are stored in a computer-readable storage medium, a processor obtains the computer instructions from the computer-readable storage medium, and the processor executes the computer instructions to implement the method for measurement configuration transmission of any one of claims 1 to 26, or the method for measurement configuration transmission of any one of claims 27 to 51.
